# EUROPÄISCHE PATENTSCHRIFT

(11) **EP 3 013 540 B1**
(45) Veröffentlichungstag und Bekanntmachung des Hinweises auf die Patenterteilung: **17.05.2017**
(21) Anmeldenummer: 15728535.4
(22) Anmeldetag: 12.06.2015
(51) Int. Cl.: B26D 3/18, B26D 3/26, B26D 3/28, B26D 1/30, A47J 43/25

(54) **LEBENSMITTELZERKLEINERUNGSVORRICHTUNG**
DEVICE FOR CHOPPING FOOD ITEMS
APPAREIL POUR COUPER DES ALLIMENTS EN PETITS MORCEAUX

(30) Priorität: 12.06.2014 DE 102014108266
(43) Veröffentlichungstag der Anmeldung: 04.05.2016
(73) Patentinhaber: Genius GmbH, 65549 Limburg (DE)
(72) Erfinder: REPAC, Cedomir, 65611 Brechen (DE)
(74) Vertreter: Grabovac, Dalibor
(86) Internationale Anmeldenummer: PCT/EP2015/063159
(87) Internationale Veröffentlichungsnummer: WO 2015/189382

(56) Entgegenhaltungen:
- CN-Y- 201 205 229
- DE-A1- 2 704 384
- DE-A1-102009 023 167
- DE-A1-102012 211 360
- DE-U1-202009 011 687

## Beschreibung

Die Erfindung betrifft eine Lebensmittelzerkleinerungsvorrichtung, die ein Basisteil, ein erstes Zerkleinerungswerkzeug, wenigstens ein weiteres Zerkleinerungswerkzeug und einen Auffangbehälter für zerkleinertes Lebensmittelgut aufweist und bei der wenigstens ein Zerkleinerungswerkzeug oder wenigstens ein Teil eines der Zerkleinerungswerkzeuge wieder lösbar an dem Basisteil festgelegt ist oder festlegbar ist.

Aus DE 10 2009 023 167 A1 ist eine Vorrichtung zum Schneiden von Nahrungsmitteln, wie Obst und Gemüse, mit einem mehrere Schneiden aufweisenden Schneidteil und einem Betätigungsteil, welche gegeneinander verschwenkbar gelagert sind, bekannt. Zum Schneiden des Schneidgutes wird das Betätigungsteil gegen das Schneidteil gedrückt, wobei das Betätigungsteil einen Stempel aufweist, der das Schneidgut durch das Schneidteil hindurchdrückt, wobei die Schneiden in korrespondierende Vertiefungen des Stempels eintauchen. Das Schneidteil weist einen Schneidrahmen auf, in dem Schneidklingen gehalten sind. Die Vorrichtung weist ferner ein Deckelteil zum Anbringen an einem Aufnahmebehälter für das geschnittene Schneidgut auf, wobei das Deckelteil eine Öffnung aufweist, die einen Durchgang für das geschnittene Schneidgut bildet.

Eine Lebensmittelzerkleinerungsvorrichtung der eingangs genannten Art ist auch aus DE 20 2011 050 041 U1 bekannt. Diese Lebensmittelzerkleinerungsvorrichtung weist einen besonderen Schneideinsatz mit einer ersten Schneidklingenanordnung, die in einem ersten Bereich angeordnet ist, und mit einer zweiten Schneidklingenanordnung, die in einem zweiten, vom ersten Bereich verschiedenen Bereich angeordnet ist, sodass wahlweise entweder die erste Schneidklingenanordnung oder die zweite Schneidklingenanordnung in einer Arbeitsposition innerhalb der Lebensmittelzerkleinerungsvorrichtung positioniert und verwendet werden kann. Diese Druckschrift offenbart auch ein Set, das aus mehreren, unterschiedlichen Schneideinsätzen, von denen jeweils ein Schneideinsatz ausgewählt und in der Arbeitsposition fixiert und verwendet werden kann.

Eine ähnliche Lebensmittelzerkleinerungsvorrichtung ist aus DE 10 2012 224 517 A1 bekannt. Die Lebensmittelzerkleinerungsvorrichtung ist dazu ausgebildet, für einen Zerkleinerungsvorgang auf einer Arbeitsfläche aufgestellt zu werden und weist ein Betätigungsteil sowie ein Basisteil, das ein Schneidteil aufweist, auf. Das Basisteil und das Betätigungsteil sind derart gelenkig verbunden, dass das Betätigungsteil zum Hindurchdrücken von zu zerkleinerndem Lebensmittelgut aus einer Einlegestellung gegen das Schneidteil in eine Schließstellung und anschließend von der Schließstellung wieder in die Einlegestellung schwenkbar ist. Die Lebensmittelzerkleinerungsvorrichtung zeichnet sich dadurch aus, dass die Lebensmittelzerkleinerungsvorrichtung wenigstens eine Antriebseinrichtung, insbesondere einen Federantrieb, zum Unterstützen oder Bewirken der Schwenkbewegung von der Schließstellung in die Einlegestellung und/oder von der Einlegestellung in die Schließstellung aufweist.

Aus CN 201 205 229 Y ist eine ähnlich funktionierende Vorrichtung bekannt. Das Betätigungsteil dieser Vorrichtung weist mehrere Ausnehmungen auf, in denen separat zu betreibende, zangenartige Zerkleinerungsvorrichtungen verstaut werden können.

Aus DE 21 2005 000 048 U1 ist eine Lebensmittelverarbeitungsvorrichtung mit einem Behälter bekannt. Auf die Öffnung des Behälters ist eine Schale aufgesetzt, die eine Mehrzahl von Schneiden aufweist. Darüber hinaus ist ein Deckel schwenkbar an dem Behälter angebracht, der einen Pressstempel zum Hindurchdrücken von zu zerkleinerndem Gut durch die Schneiden aufweist.

Die oben genannten, aus dem Stand der Technik bekannten Vorrichtungen bieten ausschließlich die Möglichkeit, Lebensmittel durch Hindurchdrücken durch ein Schneidteil mit Hilfe eines schwenkbar gelagerten Pressstempels zu zerkleinern. Eine Möglichkeit, das Lebensmittelgut auf andere Weise zerkleinern zu können, besteht bei diesen Vorrichtungen nicht. Der Benutzer ist daher darauf angewiesen, andere Lebensmittelzerkleinerungsvorrichtungen zu verwenden, wenn das Lebensmittelgut auf andere Weise zerkleinert werden soll.

Aus DE 10 2012 211 360 A1 ist eine Vierkantreibe mit vier orthogonal zueinander angeordneten, nicht abnehmbaren Reibflächen zum Abreiben von Reibgut, insbesondere von Lebensmitteln, bekannt. Die Vierkantreibe weist einen quadratischen, rohrförmigen Querschnitt und einen in diese einschiebbaren Behälter zum Auffangen von Reibgut auf. Eine ähnliche Vierkantreibe sind aus US Des. 343,098, DE 10 2005 011 310 A1 und aus GB 189827111 A bekannt. Diese Vorrichtungen bieten lediglich die Möglichkeit, Lebensmittel zu reiben. Andere Möglichkeiten zum zerkleinern von Lebensmitteln bieten diese Vorrichtungen nicht.

Aus DE 20 2009 011 687 U1 ist eine Vorrichtung bekannt, die einen Auffangbehälter aufweist, an dem ein Betätigungsteil mit einem Pressstempel schwenkbar gelagert ist. Das Betätigungsteil dient dazu, zu zerkleinerndes Lebensmittelgut durch ein auf die Öffnung des Behälters aufgesetztes Schneidgitter zu drücken. Zusätzlich ist das Betätigungsteil als Küchenhobel ausgebildet, der eine Gleitbahn zum Verschieben eines zu zerkleinernden Schneidguts und eine Klinge aufweist, die an der Gleitbahn derart angeordnet ist, dass sie vom Schneidgut während seiner Verschiebung auf der Gleitbahn Schneidgutteile abschneidet. Diese Vorrichtung bietet auf den ersten Blick den Vorteil, das Lebensmittelgut auf unterschiedliche Weise zerkleinert werden kann. Allerdings weist die Vorrichtung den besonderen Nachteil auf, dass das Betätigungsteil wegen des integrierten Hobels größeren Belastungen beim Hindurchdrücken von zu zerkleinerndem Gut durch das Schneidgitter nicht standhält. Daher ist lediglich vorgesehen, die mit Hilfe des Hobels erzeugten Scheiben von Lebensmittelgut nach dem Hobelvorgang durch Hindurchdrücken durch das Schneidgitter weiter zu zerteilen. Ein Hindurchdrücken von größeren, nicht zuvor gehobelten Lebensmittelstücken, wie beispielsweise größeren Kartoffelstücken, erlaubt diese Vorrichtung nicht.

Aus DE 27 04 384 A1 ist eine Zerkleinerungsvorrichtung bekannt, bei der in einem Rahmen zwei unterschiedliche Gitter eingelassen sind. Mittels eines Druckhebels, der gelenkig an dem Rahmen gelagert ist, kann Lebensmittelgut durch jeweils eines der Schneidgitter gedrückt werden. Der Druckhebel kann seitlich verschoben werden, so dass mit ihm Lebensmittel entweder durch das eine Schneidgitter oder durch das andere Schneidgitter gedrückt werden können.

Es ist daher die Aufgabe der vorliegenden Erfindung, eine Lebensmittelzerkleinerungsvorrichtung anzugeben, die es erlaubt, Lebensmittelgut auf unterschiedliche Weise zu zerkleinern und die darüber hinaus schnell und effizient handhabbar ist und die kompakt ausgebildet werden kann.

Diese Aufgabe wird durch eine Lebensmittelzerkleinerungsvorrichtung der eingangs genannten Art gelöst, die dadurch gekennzeichnet ist, dass der Auffangbehälter wahlweise in einer ersten Drehstellung, in der er das mit dem ersten Zerkleinerungswerkzeug zerkleinerte Lebensmittelgut auffängt, oder in einer zweiten, von der ersten Drehstellung verschiedenen, Drehstellung, in der er das mit dem zweiten Zerkleinerungswerkzeug zerkleinerte Lebensmittelgut auffängt, in dem Basisteil anordenbar ist.

Die erfindungsgemäße Lebensmittelzerkleinerungsvorrichtung hat den ganz besonderen Vorteil, dass mehrere unterschiedliche Zerkleinerungswerkzeuge in einem Gerät zur Verfügung gestellt sind, wobei der Auffangbehälter für jedes der Zerkleinerungswerkzeuge zum Auffangen des zerkleinerten Lebensmittelgutes verwendet werden kann.

Insbesondere kann vorteilhaft vorgesehen sein, dass sich die unterschiedlichen, möglichen Stellungen des Auffangbehälters, die unterschiedlichen Zerkleinerungswerkzeugen zugeordnet sind, durch eine unterschiedliche Ausrichtung der Öffnung des Auffangbehälters unterscheiden, wobei der Auffangbehälter in sämtlichen Stellungen vorzugsweise dasselbe Raumvolumen innerhalb des Basisteils einnimmt.

Bei einer ganz besonders vorteilhaften Ausführung der erfindungsgemäßen Lebensmittelzerkleinerungsvorrichtung ist der Auffangbehälter wie eine Schublade in das Basisteil einschiebbar und aus dem Basisteil wieder entnehmbar. Eine solche Ausführung bietet den besonderen Vorteil, dass der Auffangbehälter auf einfache Weise in die jeweils nötige Auffangposition gebracht werden kann und von dieser auf einfache Weise wieder entnommen werden kann.

Bei einer besonderen Ausführung weist das Basisteil eine Aufnahme für den Auffangbehälter auf. in die der Auffangbehälter in unterschiedlichen Stellungen eingeführt werden kann, um die Einfüllöffnung des Auffangbehälters zu dem jeweils zu verwendenden Zerkleinerungswerkzeug hin ausrichten zu können.

Vorzugsweise sind die Aufnahme und der Auffangbehälter derart ausgebildet, dass der Auffangbehälter in der jeweiligen Stellung sicher gehalten ist und sich nicht ungewollt in eine andere Stellung bewegen kann. Hierfür können die Aufnahme und/oder der Auffangbehälter beispielsweise Führungs- und Anschlagelemente aufweisen, die den eingefügten Auffangbehälter in seiner jeweiligen Stellung halten.

Vorzugsweise ist der Auffangbehälter derart in dem Basisteil anordenbar, insbesondere in das Basisteil einschiebbar, dass er das zerkleinerte Lebensmittelgut automatisch auffängt.

Eine besonders kompakte Bauweise kann beispielsweise dadurch erreicht werden, dass das Basisteil Bestandteil sowohl des ersten Zerkleinerungswerkzeugs, als auch des weiteren Zerkleinerungswerkzeugs ist. Alternativ kann auch vorgesehen sein, dass das erste und/oder das weitere Zerkleinerungswerkzeug, vorzugsweise werkzeug- und zerstörungsfrei wieder lösbar, an dem Basisteil festgelegt sind.

Insbesondere solche Ausführungen der erfindungsgemäßen Lebensmittelzerkleinerungsvorrichtung haben den ganz besonderen Vorteil, dass die einzelnen Zerkleinerungswerkzeuge alle in ihren jeweiligen Funktionsstellungen an einem Basisteil angeordnet sein können und dass daher kein großer Umbauaufwand getrieben werden muss, wenn nach der Benutzung eines der Zerkleinerungswerkzeuge ein anderes Zerkleinerungswerkzeug zum Einsatz kommen soll.

Darüber hinaus haben insbesondere solche Ausführungen den besonderen Vorteil, dass die Zerkleinerungswerkzeuge nicht einzeln und separat voneinander verstaut werden müssen, wenn sie nicht gebraucht werden. Vielmehr kann die gesamte Lebensmittelzerkleinerungsvorrichtung samt den in ihren jeweiligen Funktionsstellungen befindlichen Zerkleinerungswerkzeugen einfach und schnell, beispielsweise in einem Küchenschrank, verstaut werden und steht unmittelbar zur Verfügung, sobald sie wieder gebraucht wird, ohne dass umständliche Rüst- oder Umbauarbeiten erforderlich wären.

Bei einer ganz besonders vorteilhaften Ausführung ist vorgesehen, dass das Basisteil ein Schneidteil trägt und dass die Lebensmittelzerkleinerungsvorrichtung ein gelenkig, insbesondere an dem Basisteil, festgelegtes Betätigungsteil aufweist, das zum Hindurchdrücken von zu zerkleinerndem Lebensmittelgut durch das Schneidteil aus einer Einlegestellung gegen das Schneidteil in eine Schließstellung und anschließend von der Schließstellung wieder in die Einlegestellung schwenkbar ist, wobei vorzugsweise das Schneidteil und das Betätigungsteil Bestandteile des ersten Zerkleinerungswerkzeugs sind. Eine solche Ausführung erlaubt es, je nach Art der Klingenanordnung des gewählten Schneidteils, beispielsweise, das zu zerkleinernde Lebensmittelgut in Scheiben oder in Würfel zu zerteilen.

Bei einer besonderen Ausführung weist die Lebensmittelzerkleinerungsvorrichtung an demselben Basisteil gleichzeitig das erste Zerkleinerungswerkzeug und das weitere Zerkleinerungswerkzeug (oder sogar mehrere weitere Zerkleinerungswerkzeuge) auf. Alternativ oder zusätzlich kann vorgesehen sein, dass das Basisteil gleichzeitig Bestandteil sowohl des ersten Zerkleinerungswerkzeugs, als auch des weiteren Zerkleinerungswerkzeugs oder mehrerer weiterer Zerkleinerungswerkzeuge ist.

Bei einer besonderen Ausführung hat das wenigstens eine weitere Zerkleinerungswerkzeug keine Bauteile oder ausschließlich das Basisteil mit dem ersten Zerkleinerungswerkzeug gemeinsam. Eine solche Ausführung hat den Vorteil, dass die Zerkleinerungswerkzeuge unabhängig voneinander betätigbar sind. Vorzugsweise besteht das weitere Zerkleinerungswerkzeug, abgesehen von dem Basisteil, aus anderen Bauteilen, als das erste Zerkleinerungswerkzeug.

Alternativ oder zusätzlich kann insbesondere vorgesehen sein, dass das erste Zerkleinerungswerkzeug und das weitere Zerkleinerungswerkzeug (oder, falls vorhanden, mehrere weitere Zerkleinerungswerkzeuge) unabhängig voneinander betätigbar sind und/oder hinsichtlich ihrer Funktionsfähigkeit nicht aufeinander angewiesen sind. Insbesondere kann die Lebensmittelzerkleinerungsvorrichtung vorteilhaft derart ausgebildet sein, dass das weitere Zerkleinerungswerkzeug, abgesehen von dem Basisteil, keine Bauteile aufweist, ohne die das erste Zerkleinerungswerkzeug funktionsunfähig ist.

Insbesondere wenn das weitere Zerkleinerungswerkzeug aus von dem Schneidteil und dem Betätigungsteil verschiedenen Bauteilen gebildet ist, ist vorteilhaft erreicht, dass diese Bauteile nicht aufwendig umgerüstet werden müssen, wenn das weitere Zerkleinerungswerkzeug benutzt werden soll, und dass diese Bauteile bei Benutzung des weiteren Zerkleinerungswerkzeugs keiner sie überfordernden Belastung ausgesetzt sind.

Die erfindungsgemäße Lebensmittelzerkleinerungsvorrichtung kann mehrere weitere Zerkleinerungswerkzeuge aufweisen. Beispielsweise kann vorteilhaft vorgesehen sein, dass ein weiteres Zerkleinerungswerkzeug als Hobel ausgebildet ist. Alternativ oder zusätzlich kann vorteilhaft vorgesehen sein, dass ein weiteres Zerkleinerungswerkzeug als Reibe ausgebildet ist. Insbesondere kann die Lebensmittelzerkleinerungsvorrichtung auch mehrere unterschiedliche Reiben, beispielsweise eine Grobreibe und eine Feinreibe, als weitere Zerkleinerungswerkzeuge aufweisen.

Alternativ oder zusätzlich kann auch vorgesehen sein, dass die Lebensmittelzerkleinerungsvorrichtung als ein weiteres Zerkleinerungswerkzeug einen Spiralschneider, insbesondere nach Art eines Anspitzers, aufweist. Eine solche Ausführung hat den ganz besonderen Vorteil, dass zu zerkleinernde Lebensmittel, wie beispielsweise Möhren, Rettich, Zucchini oder Gurken, in spiralförmige Girlanden geschnitten werden können, die insbesondere dazu geeignet sind, eine Mahlzeit, wie beispielsweise eine Salatzubereitung, zu verzieren.

Bei einer besonders vorteilhaften Ausführung ist der Spiralschneider, insbesondere anstelle des Schneidteiles, in eine Aufnahme des Basisteils einsetzbar. Eine solche Ausführung hat den besonderen Vorteil, dass der Benutzer die Vorrichtung nach einem Zerkleinerungsvorgang, bei dem Lebensmittel mit Hilfe des Betätigungsteils durch das Schneidteil gedrückt wurden, schnell und effizient für ein Erzeugen von spiralförmigen Girlanden verwenden kann. Hierbei kann vorteilhaft vorgesehen sein, dass das Zerkleinerungswerkzeug passgenau und/oder verrastend in die Aufnahme einsetzbar ist. Auf diese Weise ist sichergestellt, dass das Zerkleinerungswerkzeug sicher in seiner Arbeitsposition gehalten ist.

Der Spiralschneider kann vorteilhaft eine Halteplatte aufweisen, die hinsichtlich Form und Größe dieselbe Außenkontur aufweist, wie das Schneidteil oder ein anderes Zerkleinerungswerkezug. Hierdurch ist vorteilhaft erreicht, dass wahlweise das Schneidteil oder das Zerkleinerungswerkzeug ohne größeren Aufwand und ohne dass zusätzliche Fixierungsbauteile erforderlich wären, sicher und zuverlässig in der Aufnahme des Basisteils festgelegt werden kann.

Bei einer ganz besonders vorteilhaften Ausführung weist das Zerkleinerungswerkzeug eine Halteplatte auf, in die wahlweise wenigstens einer von mehreren unterschiedlichen Spiralschneideinsätzen einfügbar ist. Insbesondere kann vorteilhaft vorgesehen sein, dass jeder Spiralschneideinsatz einen, insbesondere kegelförmigen, Aufnahmeraum zum Einführen von Lebensmittelgut aufweist, an dessen Wandung jeweils eine Schneidklinge angeordnet ist. und/oder dass jeder Spiralschneideinsatz jeweils einen, insbesondere kegelförmigen, Aufnahmeraum zum Einführen von Lebensmittelgut aufweist, in dem das Lebensmittelgut rotierbar ist. Die Spiralschneideinsätze können sich insbesondere in Bezug auf ihre Form und/oder Größe und/oder in Bezug auf die Dicke und/oder Breite der mit ihnen schneidbaren spiralförmigen Girlanden und/oder in Bezug auf die Anzahl der gleichzeitig bei einem Schneidvorgang entstehenden spiralförmigen Girlanden unterscheiden.

Bei einer besonderen Ausführung weist die Lebensmittelzerkleinerungsvorrichtung einen, insbesondere passgenau und/oder verrastend, in eine Aufnahme des Basisteils einsetzbaren Einsatz auf, der sowohl das Schneidteil, als auch den Spiralschneider aufweist. Eine solche Ausführung hat den besonderen Vorteil, dass die Lebensmittelzerkleinerungsvorrichtung nicht umgebaut werden muss, wenn nach einem Zerkleinerungsvorgang, bei dem das Schneidteil verwendet wurde, anschließend spiralförmige Girlanden geschnitten werden sollen; oder umgekehrt, wenn nach dem Schneiden spiralförmiger Girlanden ein Zerkleinern unter Verwendung des Schneidteils erfolgen soll.

Bei einer ganz anderen Ausführung weist das Betätigungsteil den Spiralschneider auf. Dieser kann insbesondere derart angeordnet sein, dass er vorzugsweise bei geschlossenem Betätigungsteil, also wenn das Betätigungsteil gegen das Basisteil geschwenkt ist, verwendet wird. Werden nun mit Hilfe des Spiralschneiders spiralförmige Girlanden geschnitten, können diese durch die Aufnahme, in die für diesen Schneidvorgang kein Schneidteil eingesetzt ist, hindurch beispielsweise in einen Auffangbehälter fallen. Es ist alternativ auch möglich, dass das Basisteil hierfür eine eigene Durchlassöffnung aufweist.

Der Spiralschneider kann vorteilhaft in der Weise aufgebaut sein, dass er einen, insbesondere kegelförmigen, Aufnahmeraum zum Einführen von Lebensmittelgut, wie beispielsweise einer Möhre, eines Rettich, einer Gurke oder einer Zucchini, aufweist, an dessen Wandung eine Schneidklinge angeordnet ist. Alternativ oder zusätzlich kann auch vorgesehen sein, dass der Spiralschneider einen, insbesondere kegelförmigen, Aufnahmeraum zum Einführen von Lebensmittelgut aufweist, in dem das Lebensmittelgut rotierbar ist. Außerdem weist die Wandung des Aufnahmeraums eine Öffnung auf, durch die hindurch die spiralförmige Girlande aus dem Aufnahmeraum austreten kann.

Vorzugsweise ist die Schneidklinge derart angeordnet, dass bei einer Rotationsbewegung - ähnlich wie beim Bleistiftanspitzen - endseitig umlaufend von dem rotierenden Lebensmittel eine spiralförmige Schicht abgetrennt wird. Hierzu kann die Schneide der Schneidklinge derart angeordnet sein, dass sie in den Aufnahmeraum ragt, wobei der Parallelabstand der Schneidklinge zur Aufnahmeraumwandung die Dicke der abgetrennten Schicht bestimmt.

Nach einem unabhängigen Erfindungsgedanken bezüglich des Zerkleinerungswerkzeugs nach Art eines Anspitzers, der auch losgelöst von dem übrigen Aufbau der Lebensmittelzerkleinerungsvorrichtung realisierbar ist, können je nach Rotationsrichtung Schichten unterschiedlicher Dicke abgetrennt werden. Eine solche Ausführung hat zum einen den ganz besonderen Vorteil, dass der Benutzer individuell entscheiden kann, ob er das Lebensmittelgut in dünne oder dicke spiralförmige Girlanden schneiden will. Zum anderen hat eine solche Ausführung den ganz besonderen Vorteil, dass besonders spröde oder empfindliche Lebensmittel, bei denen die Girlanden dazu neigen zu brechen, wenn sie zu dünn geschnitten werden, alternativ in dickere spiralförmige Girlanden geschnitten werden können. Umgekehrt können Lebensmittel, die für ein Schneiden in dicke spiralförmige Girlanden ungeeignet sind, wahlweise in dünne spiralförmige Girlanden geschnitten werden. Kurz: Eine derartige Ausführung ermöglicht es insbesondere, die Schneiddicke an das jeweilige Lebensmittel anzupassen.

Insbesondere kann vorteilhaft vorgesehen sein, dass der Spiralschneider von einem in dem Aufnahmeraum in Uhrzeigerrichtung rotierenden Lebensmittelgut eine Schicht einer ersten Dicke abtrennt, und dass der Spiralschneider von einem in den Aufnahmeraum entgegen dem Uhrzeigersinn rotierenden Lebensmittelgut eine Schicht einer zweiten Dicke, die von der ersten Dicke verschieden ist, abtrennt.

Das Schneiden in spiralförmige Girlanden mit unterschiedlichen Schichtdicken, insbesondere in Abhängigkeit von der Rotationsrichtung, kann beispielsweise durch die Verwendung einer Pendelklinge, die zwei Schneiden aufweist, realisiert sein. Hierbei kann insbesondere vorgesehen sein, dass eine Schneide zum Schneiden in dünne spiralförmige Girlanden dient, während die andere Schneide zum Schneiden in dicke spiralförmige Girlanden dient.

Insbesondere kann die Pendelklinge beispielsweise derart angeordnet sein, dass sich in Bezug auf die erste Schneide bei einer Rotation des Lebensmittelgutes in Uhrzeigerrichtung ein erster Abstand zur Wandung des Aufnahmeraums einstellt, während sich bei einer Rotation des Lebensmittelgutes entgegen der Uhrzeigerrichtung ein zweiter Abstand der zweiten Schneide zum Aufnahmeraum einstellt, wobei der erste Abstand von dem zweiten Abstand verschieden ist. Insbesondere können die Schneidklingen parallel zueinander und/oder in Bezug auf die Ausrichtung der Schneiden einander entgegengesetzt orientiert sein. Bei einer vorteilhaften Ausführung ist die Pendelklinge derart aufgehängt, dass sich bei einer Rotation des Lebensmittelguts in Uhrzeigerrichtung automatisch die erste Schneide in den Aufnahmeraum dreht, während die zweite Schneide aus dem Aufnahmeraum herausgedreht wird, und dass sich umgekehrt bei einer Rotation des Lebensmittelguts entgegen dem Uhrzeigersinn automatisch die zweite Schneide in den Aufnahmeraum dreht, während die erste Schneide aus dem Aufnahmeraum herausgedreht wird.

In vorteilhafter Weise kann insbesondere auch vorgesehen sein, dass das Zerkleinerungswerkzeug eine Pendelklinge mit zwei Schneiden aufweist, von denen - insbesondere automatisch -jeweils eine in Abhängigkeit von der Rotationsrichtung des zu zerkleinernden Lebensmittelguts in das Lebensmittelgut schneidet.

Bei einer besonderen Ausführung ist der Spiralschneider dazu ausgebildet, gleichzeitig mehrere spiralförmige Girlanden von einem Lebensmittelgut abzutrennen. Auf diese Weise kann Gemüse vorteilhaft in Gemüsenudeln, beispielsweise Zucchininudeln, geschnitten werden. Der Spiralschneider kann insbesondere eine Schneideinrichtung aufweisen, die die abzutrennende Schicht oder die bereits abgetrennte Schicht in mehrere zueinander parallele Streifen zerteilt. Alternativ oder zusätzlich kann auch vorgesehen sein, dass der Spiralschneider eine Schneidklinge, die eine Schicht von dem Schneidgut abtrennt, und eine Schneideinrichtung, die zu der Schneidklinge senkrecht angeordnete weitere Schneidklingen hat, aufweist. Die weiteren Schneidklingen können dazu dienen, die abzutrennende Schicht oder die bereits abgetrennte Schicht in mehrere zueinander parallele Streifen zu zerteilen.

Die Lebensmittelzerkleinerungsvorrichtung kann genau einen Spiralschneider aufweisen. Es ist jedoch durchaus vorteilhaft möglich, dass die Lebensmittelzerkleinerungsvorrichtung einen weiteren Spiralschneider oder mehrere weitere Spiralschneider aufweist. Insbesondere kann vorteilhaft vorgesehen sein, dass der weitere Spiralschneider eine andere Größe aufweist, als der Spiralschneider, und/oder dass der Aufnahmeraum des weiteren Spiralschneiders einen anderen Keilwinkel aufweist, als der Aufnahmeraum des Spiralschneiders. Auf diese Weise ist es ermöglicht, wahlweise unterschiedlich geformte spiralförmige Girlanden zu schneiden. Auch ist es möglich, bei einem im Durchmesser kleinen Lebensmittelgut einen kleineren der Spiralschneider zu verwenden, und bei einem im Durchmesser größeren Lebensmittelgut einen größeren der Spiralschneider.

Alternativ oder zusätzlich kann vorteilhaft vorgesehen sein, dass die Lebensmittelzerkleinerungsvorrichtung als ein weiteres Zerkleinerungswerkzeug einen Entsteiner zum Entsteinen von Steinobst aufweist. Eine solche Ausführung hat den ganz besonderen Vorteil, dass außer steinlosen Lebensmitteln auch Steinobst verarbeitet werden kann. Dies kann insbesondere in der Weise geschehen, dass in einem ersten Arbeitsgang ein Entsteinen erfolgt und dass das entsteinte Steinobst anschließend, insbesondere mit einem der anderen Zerkleinerungswerkzeuge, weiter zerkleinert wird. Beispielsweise kann das entsteinte Steinobst dadurch weiter verarbeitet werden, dass es mittels des Betätigungsteils durch ein Schneidteil gedrückt wird. Es ist auch möglich, die entsteinten Früchte nicht weiter zu zerkleinern, sondern am Stück zu verwenden.

Insbesondere kann vorteilhaft vorgesehen sein, dass die Lebensmittelzerkleinerungsvorrichtung einen Steinobsthalter zum Halten wenigsten eines Stückes Steinobst und wenigstens einen Ausdrückdorn aufweist, so dass durch eine Schwenkbewegung des Ausdrückdornes relativ zu dem Steinobsthalter der Stein eines von dem Steinobsthalter gehaltenen Stückes Steinobst aus dem Steinobst herausdrückbar ist.

Bei einer besonderen Ausführungsform ist der Ausdrückdorn an dem Betätigungsteil festgelegt. Es ist auch möglich, dass der Ausdrückdorn, insbesondere werkzeugfrei, wieder lösbar an dem Betätigungsteil festgelegt werden kann. Beispielsweise ist bei einer besonderen Ausführung vorgesehen, dass der Ausdrückdorn von dem Betätigungsteil entfernt wird, wenn das Betätigungsteil zum Hindurchdrücken von zu zerkleinernden Gut durch das Schneidteil verwendet wird und dass der Ausdrückdorn an dem Betätigungsteil befestigt wird, wenn Steinobst entsteint werden soll.

Der Ausdrückdorn kann vorteilhaft als Klinge ausgebildet sein oder wenigstens eine Klinge aufweisen, die beim Entsteinungsvorgang durch die Haut und das Fruchtfleisch des Steinobstes dringt, bis es den Stein erreicht und diesen solange vor sich herschiebt, bis der Stein aus dem jeweiligen Stück Steinobst herausgedrückt ist. Auf diese Weise ist gewährleistet, dass das Fruchtfleisch nicht oder nur unwesentlich zerdrückt wird. Eine besondere Stabilität des Ausdrückdorns kann dadurch erreicht werden, dass dieser durch zwei gekreuzte Klingen gebildet ist.

Das Festlegen des Ausdrückdorns an dem Betätigungsteil kann vorteilhaft insbesondere mittels einer Steckverbindung realisiert sein. Eine Steckverbindung ermöglicht es in vorteilhafter Weise, den Ausdrückdorn stabil an dem Betätigungsteil festzulegen, wobei es dennoch ermöglicht ist, den Ausdrückdorn schnell und unkompliziert wieder entfernen zu können.

Alternativ zu einem an dem Betätigungsteil festgelegten oder festlegbaren Ausdrückdorn ist bei einer besonderen Ausführung ein weiteres Betätigungsteil vorhanden, das den Ausdrückdorn aufweist und das anstelle des Betätigungsteils an dem Basisteil gelenkig festlegbar ist. Bei dieser Ausführung erfolgt ein Zerkleinern des zu zerkleinernden Lebensmittelguts unter Verwendung des Betätigungsteils, um das Lebensmittelgut durch das Schneidteil hindurchzudrücken. Wenn statt einem Zerkleinern ein Entsteinen von Steinobst stattfinden soll, wird das Betätigungsteil von dem Basisteil gelöst und stattdessen das weitere Betätigungsteil, das den Ausdrückdorn (oder mehrere Ausdrückdorne zum gleichzeitigen Entsteinen mehrerer Stücke Steinobst) aufweist, an dem Basisteil gelenkig festgelegt.

Der Steinobsthalter ist vorzugsweise derart ausgebildet und angeordnet, dass das jeweils zu entsteinende Stück Steinobst während des Entsteinungsvorgangs zuverlässig in einer Entsteinungsposition gehalten wird, insbesondere ohne dass das zu entsteinende Stück Steinobst dem Ausdrückdorn ausweichen kann.

Bei einer besonderen Ausführung ist der Steinobsthalter, insbesondere passgenau und/oder verrastend, in eine Aufnahme des Basisteils einsetzbar. In ganz besonders vorteilhafter Weise kann vorgesehen sein, dass der Steinobsthalter anstelle des Schneidteils in die Aufnahme eingesetzt werden kann, wenn statt eines Zerkleinerungsvorgangs ein Entsteinungsvorgang durchgeführt werden soll. Dies kann beispielsweise in der Weise realisiert sein, dass der Steinobsthalter eine Halteplatte aufweist, die hinsichtlich Form und Größe dieselbe Außenkontur aufweist, wie das Schneidteil. Analog ist bei einer besonderen Ausführung vorgesehen, dass das Schneidteil, wenn ein Zerkleinerungsvorgang durchgeführt werden soll, insbesondere passgenau und/oder verrastend, in die Aufnahme eingesetzt werden kann.

Bei einer ganz besonders vorteilhaften Ausführung weist die Vorrichtung einen Vorratsbehälter für eine Vielzahl von zu entsteinenden Stücken Steinobst auf. Insbesondere kann vorteilhaft vorgesehen sein, dass der Vorratsbehälter derart ausgebildet und angeordnet ist, dass nach jedem Entsteinungsvorgang, insbesondere automatisch, wenigstens ein zu entsteinendes Stück Steinobst zu dem Steinobsthalter, insbesondere in die Entsteinungsposition, nachrückt.

Es sei darauf hingewiesen, dass im Sinne dieser Anmeldung mit der Formulierung "ein Stück Steinobst" jeweils eine ganze Steinobstfrucht gemeint ist und nicht etwa ein Stück einer Steinobstfrucht. Ein Stück Steinobst kann beispielsweise eine Kirsche oder eine Pflaume oder eine Mirabelle sein.

Wie weiter unten noch im Detail beschrieben ist, kann die Lebensmittelzerkleinerungsvorrichtung vorteilhaft einen Auffangbehälter für das zerkleinerte Lebensmittelgut aufweisen. Es ist insbesondere möglich, dass in dem Auffangbehälter die Steine und/oder das entsteinte Steinobst, insbesondere automatisch, aufgefangen werden. Insbesondere kann vorteilhaft vorgesehen sein, dass der Auffangbehälter zwei voneinander getrennte Kammern aufweist und der Entsteinungsvorgang derart abläuft, dass in einer Kammer die Steine und in der anderen Kammer die entsteinten Steinobstfrüchte aufgefangen werden. Es ist auch möglich, dass zur Ausbildung von zwei Kammern eine Trennwand in den Auffangbehälter eingesetzt werden kann.

Bei einer besonderen Ausführung weist das Betätigungsteil und/oder das weitere Betätigungsteil mehrere Ausdrückdorne auf, die dazu ausgebildet und angeordnet sind, gleichzeitig mehrere Stücke Steinobst zu entsteinen. Hierzu kann insbesondere vorgesehen sein, dass der Steinobsthalter dazu ausgebildet und angeordnet ist, gleichzeitig mehrere Stücke Steinobst jeweils in einer Entsteinungsposition zu halten.

Eine Lebensmittelzerkleinerungsvorrichtung, die außer einem ersten Zerkleinerungswerkzeug, das das Schneidteil und das Betätigungsteil beinhaltet, sowohl einen Hobel, als auch zwei unterschiedliche Reiben als weitere Zerkleinerungswerkzeuge aufweist, erlaubt es, insbesondere wenn zusätzlich noch die Möglichkeit der Erzeugung spiralförmiger Girlanden und/oder die Möglichkeit zum Entsteinen von Steinobst gegeben ist, die meisten im Küchenalltag anfallenden Zerkleinerungsanforderungen zu erfüllen.

Vorzugsweise ist die Lebensmittelzerkleinerungsvorrichtung derart ausgebildet, dass die einzelnen Zerkleinerungswerkzeuge unabhängig voneinander betreibbar sind. Insbesondere eine solche Ausführung hat den besonderen Vorteil, dass die Zerkleinerungswerkzeuge nicht gegenseitig aufeinander angewiesen sind und ein Zerkleinerungswerkzeug auch dann benutzt werden kann, wenn ein anderes Zerkleinerungswerkzeug nicht benutzbar ist, weil es beispielsweise verschmutzt oder defekt ist.

Wie weiter unten noch im Detail erläutert wird, kann die Lebensmittelzerkleinerungsvorrichtung vorteilhaft insbesondere in der Weise ausgeführt sein, dass jedem Zerkleinerungswerkzeug eine von mehreren unterschiedlichen Aufstellausrichtungen der Lebensmittelzerkleinerungsvorrichtung zugeordnet ist, so dass die Lebensmittelzerkleinerungsvorrichtung lediglich in der entsprechenden Aufstellausrichtung auf einer Arbeitsfläche aufgestellt zu werden braucht, um ein Bestimmtes der Zerkleinerungswerkzeuge benutzen zu können. Insbesondere um dies zu erreichen kann das Basisteil der Lebensmittelzerkleinerungsvorrichtung vorteilhaft als Vielflächner ausgebildet sein und/oder als äußere Kontur die äußere Kontur eines Vielflächners aufweisen. Eine solche Ausführung erlaubt es, an unterschiedlichen Flächen des Basisteils unterschiedliche Zerkleinerungswerkzeuge anzuordnen, sodass durch geeignetes Aufstellen der Lebensmittelzerkleinerungsvorrichtung, beispielsweise auf eine der, vorzugsweise mit Standfüßen versehenen, Flächen, eine andere Fläche, die das gewünschte Zerkleinerungswerkzeug trägt, in eine nach oben gerichtete Arbeitsposition gelangt, in der das gewünschte Zerkleinerungswerkzeug benutzt werden kann.

Insbesondere kann das Basisteil als Quader ausgebildet sein und/oder als äußere Kontur die äußere Kontur eines Quaders aufweisen. Eine solche Ausführung eignet sich besonders gut, an unterschiedlichen Flächen unterschiedliche Zerkleinerungswerkzeuge anzuordnen und die jeweils gegenüberliegende Fläche als dem Zerkleinerungswerkzeug jeweils zugeordnete Aufstellfläche zu verwenden.

Insbesondere kann das Basisteil als Rahmen ausgebildet sein, der als äußere Kontur die äußere Kontur eines Vielflächners, insbesondere eines Quaders, aufweist. Eine Ausbildung des Basisteils in Form eines Rahmens ermöglicht es insbesondere, die Zerkleinerungswerkzeuge, vorzugsweise wieder abnehmbar, in den Rahmenöffnungen festzulegen. Darüber hinaus ist eine Rahmenkonstruktion besonders stabil und kostengünstig herstellbar.

Bei einer besonderen Ausführung weist eine der unterschiedlichen Flächen des als Vielflächner ausgebildeten und/oder als äußere Kontur die eines Vielflächners aufweisenden Basisteils eine Öffnung zum Einschieben des Auffangbehälters auf. Bei dieser Fläche kann es sich insbesondere um eine, insbesondere quadratische, Stirnfläche eines quaderförmigen Basisteils handeln. Eine solche Ausführung erlaubt es, den Auffangbehälter in vier verschiedenen Stellungen durch die Öffnung in das Basisteil einzuführen, wobei die Einfüllöffnung des Auffangbehälters jeweils unterschiedlichen Flächen des Quaders zugewandt ist. Insbesondere kann auch die Öffnung quadratisch ausgebildet sein.

Wie bereits erwähnt kann vorteilhaft vorgesehen sein, dass die Zerkleinerungswerkzeuge separat voneinander jeweils an oder in einer der unterschiedlichen Flächen des Basisteils angeordnet sind oder anordenbar sind. Insbesondere kann vorteilhaft vorgesehen sein, dass wenigstens ein Zerkleinerungswerkzeug an oder in einer der unterschiedlichen Flächen des Basisteils angeordnet ist und die der Fläche gegenüberliegende Fläche als Aufstellfläche ausgebildet ist, auf die das Basisteil zur Benutzung des Zerkleinerungswerkzeugs aufstellbar ist. Die Aufstellfläche kann, wie weiter unten noch im Detail erläutert wird, mit Standfüßen versehen sein.

Insbesondere kann vorteilhaft vorgesehen sein, dass an oder in der Aufstellfläche ein weiteres Zerkleinerungswerkzeug angeordnet ist. Wenn nach einem Aufstellen der Lebensmittelzerkleinerungsvorrichtung auf der Aufstellfläche das Zerkleinerungswerkzeug der Aufstellfläche verwendet werden soll, muss die Lebensmittelzerkleinerungsvorrichtung, abgesehen von einer möglichen Stellungsänderung des Auffangbehälters, was weiter unten noch ausführlich erläutert ist, lediglich um 180 Grad um eine horizontale Achse gedreht werden, damit das Zerkleinerungswerkzeug der Aufstellfläche in seine Arbeitsposition gelangt und benutzt werden kann.

Wie bereits erwähnt kann vorteilhaft vorgesehen sein, dass wenigstens ein Zerkleinerungswerkzeug oder wenigstens ein Teil eines der Zerkleinerungswerkzeuge, insbesondere werkzeug- und zerstörungsfrei, lösbar an dem Basisteil festgelegt ist oder festlegbar ist. Alternativ oder zusätzlich kann auch vorgesehen sein, dass mehrere Zerkleinerungswerkzeuge oder jeweils wenigstens Teile unterschiedlicher Zerkleinerungswerkzeuge, insbesondere unabhängig voneinander, lösbar an dem Basisteil festgelegt sind oder festlegbar sind. Eine derartige Ausführung hat den besonderen Vorteil, dass die Zerkleinerungswerkzeuge oder wenigstens Teile der Zerkleinerungswerkzeuge für einen Reinigungsvorgang vorübergehend von dem Basisteil gelöst werden können oder gegen andere Zerkleinerungswerkzeuge oder andere Teile von Zerkleinerungswerkzeugen ausgetauscht werden können, wenn beispielsweise eine andere Art von Zerkleinerungswerkzeug eingefügt werden soll oder wenn diese defekt sind.

Zum lösbaren Festlegen des Zerkleinerungswerkzeugs oder des weiteren Zerkleinerungswerkzeugs oder eines Bauteils des Zerkleinerungswerkzeugs oder Bauteils des weiteren Zerkleinerungswerkzeugs kann beispielsweise wenigstens ein Rastelement vorhanden sein. Insbesondere kann vorteilhaft vorgesehen sein, dass das festzulegende Zerkleinerungswerkzeug oder das festzulegende Bauteil rastend in eine Öffnung oder einen Durchbruch, insbesondere eine Rahmenöffnung, des Basisteils eingefügt wird und werkzeug- und zerstörungsfrei wieder entnommen werden kann.

Um die Lebensmittelzerkleinerungsvorrichtung in unterschiedlichen Ausrichtungen zur Benutzung unterschiedlicher Zerkleinerungswerkzeuge aufstellen zu können, ohne dass das gelenkig mit dem Basisteil verbundene Betätigungsteil versehentlich aus seiner Schließstellung heraus bewegt wird, ist bei einer besonderen Ausführung eine Verriegelungsvorrichtung vorhanden, mit der das Betätigungsteil in der Schließstellung fixiert werden kann. Beispielsweise kann die Verriegelungsvorrichtung einen an dem Betätigungsteil angeordneten Sperrriegel aufweisen, der in einer Sperrstellung in eine Öffnung des Basisteils eingreift. Umgekehrt kann der Sperrriegel selbstverständlich auch an dem Basisteil angeordnet sein und in einer Verriegelungsstellung in eine Öffnung des Betätigungsteils eingreifen. Vorzugsweise sind der Sperrriegel beziehungsweise die Öffnung im Bereich des freien Endes des Betätigungsteils angeordnet.

Bei einer besonderen Ausführung ist wenigstens ein Zerkleinerungswerkzeug unlösbar an dem Basisteil angeordnet. Eine solche Ausführung bietet sich an, wenn eine Abnehmbarkeit eines Zerkleinerungswerkzeugs, beispielsweise für einen Reinigungsvorgang, nicht erforderlich ist und/oder wenn eine kostengünstige Herstellung der Lebensmittelzerkleinerungsvorrichtung gewünscht ist. Hierbei kann das Zerkleinerungswerkzeug vorteilhaft wenigstens teilweise einstückig zusammen mit dem Basisteil, beispielsweise als Spritzgussbauteil, hergestellt sein. Beispielsweise kann vorteilhaft vorgesehen sein, dass die Gleitbahn eines als Hobel ausgebildeten Zerkleinerungswerkzeugs zusammen einstückig mit dem Basisteil oder mit Teilen des Basisteils hergestellt wird und dass lediglich die Hobelschneidklinge nachträglich eingesetzt wird. Es ist jedoch auch möglich, dass auch die Hobelschneidklinge bereits beim Herstellungsprozess des Basisteils und der Gleitbahn eingefügt, insbesondere in einem Kunststoffspritzverfahren teilweise umspritzt wird.

Insbesondere ist es von Vorteil, wenn der Auffangbehälter aus einem durchsichtigen und/oder transparenten Material hergestellt ist, um, beispielsweise durch ein Fenster in dem Basisteil, den Füllstand optisch überprüfen zu können. Insbesondere kann vorteilhaft vorgesehen sein, dass der Auffangbehälter im Wesentlichen dieselbe äußere Kontur aufweist, wie das Basisteil und/oder wie eine Aufnahme in dem Basisteil für den Auffangbehälter.

Um zu verhindern, dass der Auffangbehälter versehentlich aus der Aufnahme rutscht und/oder um zu verhindern, dass sich der Auffangbehälter in der Aufnahme ungewollt bewegt, kann vorteilhaft eine Befestigungsvorrichtung, insbesondere eine Rastvorrichtung, zum vorübergehenden Festlegen des Auffangbehälters in der Aufnahme vorhanden sein. Diese kann vorteilhaft derart ausgebildet sein, dass kein zusätzlicher Arbeitsschritt zum Festlegen oder Lösen erforderlich ist, sondern derart, dass die Rastvorrichtung beim Einführen und wieder Entnehmen des Auffangbehälters automatisch betätigt wird.

Bei einer besonderen Ausführung weist das Basisteil, insbesondere in einer der Flächen, wenigstens ein Fenster auf, durch das der in dem Basisteil angeordnete Auffangbehälter und/oder dessen Füllstand sichtbar ist. Eine solche Ausführung hat den besonderen Vorteil, dass der Benutzer den Auffangbehälter nicht aus dem Basisteil zu entnehmen braucht, um den Füllstand kontrollieren zu können. Vielmehr braucht der Benutzer den Zerkleinerungsprozess für eine Kontrolle des Füllstandes nicht zu unterbrechen.

Wie bereits erläutert, ist die Lebensmittelzerkleinerungsvorrichtung vorzugsweise dazu ausgebildet, für einen Zerkleinerungsvorgang auf einer Arbeitsfläche aufgestellt zu werden. Insbesondere ist die Lebensmittelzerkleinerungsvorrichtung vorzugsweise dazu ausgebildet, für einen Zerkleinerungsvorgang wahlweise in eine von mehreren unterschiedliche Aufstellausrichtungen auf einer Arbeitsfläche aufgestellt zu werden. Jedem Zerkleinerungswerkzeug kann vorteilhaft eine Aufstellausrichtung zugeordnet sein, in die die Lebensmittelzerkleinerungsvorrichtung zur Verwendung des Zerkleinerungswerkzeugs verbracht werden kann.

Bei einer besonderen Ausführung ist die Lebensmittelzerkleinerungsvorrichtung dazu ausgebildet, für einen Zerkleinerungsvorgang mit dem ersten Zerkleinerungswerkzeug in einer ersten Aufstellausrichtung und für einen Zerkleinerungsvorgang mit dem weiteren Zerkleinerungswerkzeug in einer weiteren, von der ersten Aufstellausrichtung verschiedenen, Aufstellausrichtung auf einer Arbeitsplatte, beispielsweise einer Küchenarbeitsplatte, aufgestellt zu werden.

Bei einer vorteilhaften Ausführung sind, insbesondere an dem Basisteil, Standfüße angeordnet, die ein sicheres Aufstellen der Lebensmittelzerkleinerungsvorrichtung in den unterschiedlichen Aufstellausrichtungen erlauben. Insbesondere können die Standfüße aus einem elastischen Material und/oder aus einem Material mit hoher Haftreibung, beispielsweise aus Gummi, hergestellt sein.

Vorzugsweise stehen die Standfüße derart hervor, dass die Zerkleinerungswerkzeuge stets von der Arbeitsplatte, auf der die Lebensmittelzerkleinerungsvorrichtung aufgestellt wird, beabstandet bleiben. Auf diese Weise ist sichergestellt, dass kein Zerkleinerungswerkzeug durch Kontakt mit einer Arbeitsplatte beschädigt wird, während gerade ein anderes Zerkleinerungswerkzeug verwendet wird.

Bei einer besonders vorteilhaften Ausführung ist wenigstens ein Standfuß derart angeordnet, dass er für unterschiedliche Aufstellausrichtungen verwendbar ist. Hierfür kann der Standfuß beispielsweise an oder entlang einer Kante des, insbesondere als Vielflächner oder Quader ausgebildeten, Basisteils angeordnet sein. Insbesondere kann der Standfuß auch an einer Ecke des, insbesondere als Vielflächner oder Quader ausgebildeten, Basisteils angeordnet sein. Auf diese Weise ist es ermöglicht, den an einer Ecke angeordneten Standfuß beim Aufstellen auf jede der an die Ecke angrenzenden Flächen verwenden zu können. Wenn das Basisteil als Quader ausgebildet ist oder als äußere Kontur die eines Quaders aufweist, sind lediglich acht an den Ecken angeordnete und in jede Raumrichtung hervorstehende Standfüße ausreichend, um das Basisteil auf jede seiner sechs Flächen aufstellen zu können.

Alternativ ist es jedoch auch möglich, dass das Basisteil Standfüße aufweist, die ausschließlich zum Aufstellen in einer einzigen der möglichen Aufstellausrichtungen dienen. Insbesondere ist es beispielsweise möglich, dass das Basisteil auf wenigsten einer seiner Flächen lediglich senkrecht zur Fläche hervorstehende Standfüße aufweist.

Insbesondere das Basisteil, jedoch auch die Zerkleinerungswerkzeuge oder Teile der Zerkleinerungswerkzeuge, können vorteilhaft als Spritzgußteil, insbesondere als Kunststoffspritzgußteil, hergestellt sein. Es kann auch vorgesehen sein, dass das Basisteil wenigstens ein als Spritzgußteil, insbesondere als Kunststoffspritzgußteil, hergestelltes Bauteil aufweist. Bei einer besonderen Ausführung ist das Basisteil aus mehreren Teilen, insbesondere aus mehreren Spritzgußbauteilen, zusammengesetzt.

Bei einer ganz besonders vorteilhaften Ausführung weist das Basisteil als äußere Kontur die eines Quaders auf, wobei an einer der, vorzugsweise quadratischen, Stirnflächen eine Öffnung zum Einschieben eines Auffangbehälters vorhanden ist und wobei an einer der Seitenflächen, die der Stirnfläche benachbart ist, das Schneidteil angeordnet ist. Vorzugsweise ist bei dieser Ausführung an den weiteren Seitenflächen, die der Stirnfläche benachbart sind, jeweils ein weiteres Zerkleinerungswerkzeug, nämlich eine Grobreibe, eine Feinreibe und ein Hobel, angeordnet. Eine solche Ausführung hat den Vorteil, dass sie vier Flächen für vier Zerkleinerungswerkzeuge, nämlich für das erste Zerkleinerungswerkzeug und drei weitere Zerkleinerungswerkzeuge, bietet und darüber hinaus erlaubt, den Auffangbehälter einfach und sicher über die Stirnseite in unterschiedlichen Drehstellungen jeweils so einzuführen, dass die Behälteröffnung nach oben und dem jeweils zu verwendenden, durch geeignete Aufstellausrichtung des Basisteils oben angeordneten Zerkleinerungswerkzeug zugewandt ausgerichtet ist.

Nach einem unabhängigen Erfindungsgedanken ist eine Lebensmittelzerkleinerungsvorrichtung von besonderem Vorteil, die ein Basisteil, ein erstes Zerkleinerungswerkzeug, ein weiteres Zerkleinerungswerkzeug und einen Auffangbehälter für zerkleinertes Lebensmittelgut aufweist, wobei der Auffangbehälter wahlweise in einer ersten Stellung, in der er das mit dem ersten Zerkleinerungswerkzeug zerkleinerte Lebensmittelgut auffängt, oder in einer zweiten, von der ersten Stellung, verschiedenen Stellung, in der er das mit dem weiteren Zerkleinerungswerkzeug zerkleinerte Lebensmittelgut auffängt, in dem Basisteil anordenbar, insbesondere in das Basisteil einschiebbar, ist. Bei einer solchen Lebensmittelzerkleinerungsvorrichtung kann ein erstes der Zerkleinerungswerkzeuge ein Schneidteil und ein Betätigungsteil zum Hindurchdrücken von zu zerkleinernden Gut durch das Schneidteil aufweisen. Allerdings ist dies nicht zwingend notwendig. Vielmehr kann es sich bei den Zerkleinerungswerkzeugen auch um Zerkleinerungswerkzeuge anderer Arten, wie beispielsweise Reiben und/oder Hobel, handeln.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: eine schematische Darstellung eines Ausführungsbeispiels einer erfindungsgemäßen Lebensmittelzerkleinerungsvorrichtung in einer ersten Aufstellausrichtung zur Benutzung eines ersten Zerkleinerungswerkzeugs,
- Fig. 2: die Lebensmittelzerkleinerungsvorrichtung in der ersten Aufstellausrichtung mit abgenommenen Reiben,
- Fig. 3: die Lebensmittelzerkleinerungsvorrichtung in einer weiteren Aufstellausrichtung zur Benutzung eines weiteren Zerkleinerungswerkzeugs,
- Fig. 4: ein Beispiel einer Lebensmittelzerkleinerungsvorrichtung während eines Zerkleinerungsvorgangs in einer Schnittdarstellung,
- Fig. 5: das andere Beispiel zu Beginn eines Entsteinungsvorganges in einer Schnittdarstellung,
- Fig. 6: das andere Beispiel nach dem Herausdrücken des Steines in einer Schnittdarstellung,
- Fig. 7: ein weiteres Beispiel einer Lebensmittelzerkleinerungsvorrichtung in einer Schnittdarstellung,
- Fig. 8: ein viertes Beispiel einer Lebensmittelzerkleinerungsvorrichtung umgerüstet zum Schneiden von spiralförmigen Girlanden,
- Fig. 9: ein fünftes beispiel einer Lebensmittelzerkleinerungsvorrichtung ausgebildet zum Schneiden von spiralförmigen Girlanden,
- Fig. 10: das fünfte Beispiele bei geöffnetem Betätigungsteil, und
- Fig. 11: ein fünftes Beispiel einer Lebensmittelzerkleinerungsvorrichtung ausgebildet zum Schneiden von spiralförmigen Girlanden.

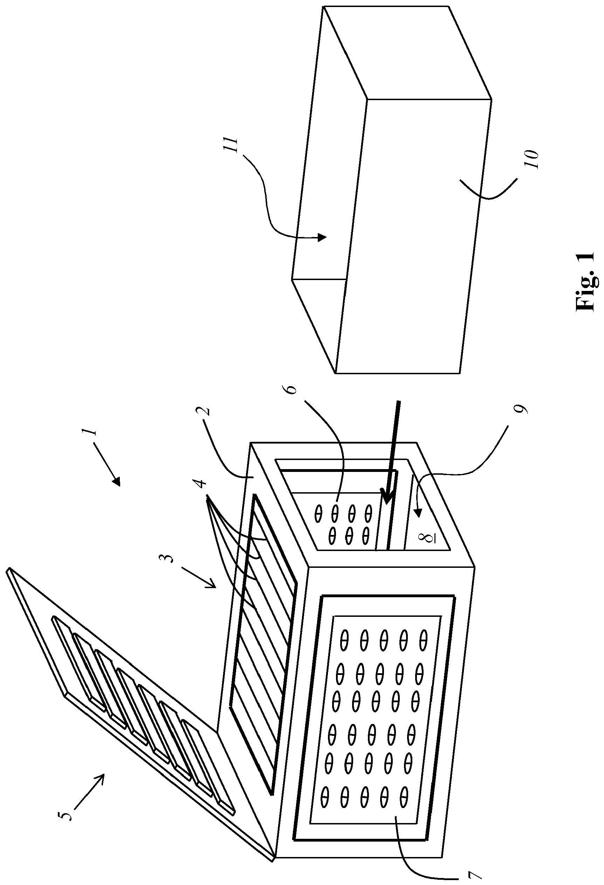

Figur 1 zeigt ein Ausführungsbeispiel einer erfindungsgemäßen Lebensmittelzerkleinerungsvorrichtung in einer ersten Aufstellausrichtung zur Benutzung eines ersten Zerkleinerungswerkzeugs 1. Die Lebensmittelzerkleinerungsvorrichtung weist ein Basisteil 2 auf, das als äußere Kontur die äußere Kontur eines Quaders hat. Das Basisteil 2 trägt ein abnehmbares Schneidteil 3, das mehrere Schneidklingen 4 aufweist. An dem Basisteil ist außerdem ein Betätigungsteil 5 gelenkig festgelegt, das zum Hindurchdrücken von zu zerkleinerndem Lebensmittelgut durch das Schneidteil 3 aus einer Einlegestellung gegen das Schneidteil 3 in eine Schließstellung und anschließend wieder von der Schließstellung in die Einlegestellung schwenkbar ist. Das Schneidteil 3 und das Betätigungsteil sind Bestandteile des ersten Zerkleinerungswerkzeugs 1. An dem Basisteil sind weitere Zerkleinerungswerkzeuge, nämlich eine Feinreibe 6, eine Grobreibe 7 und an der Unterseite ein Hobel 8 angeordnet. Durch eine Öffnung 9 in der quadratischen Stirnseite des Basisteils 2 kann ein Auffangbehälter 10 eingeschoben werden.

Der Auffangbehälter 10 wird vorzugsweise stets so eingeschoben, dass seine Einfüllöffnung 11 dem jeweils zu verwendenden und nach oben gerichteten Zerkleinerungswerkzeug zugewandt ist. In der gezeigten Aufstellausrichtung des Basisteils wird der Auffangbehälter derart eingeführt, dass dessen Einfüllöffnung dem Schneidteil 3 zugewandt ist, so dass das durch das Schneidteil durchgedrückte und zerkleinerte Lebensmittelgut automatisch in den Auffangbehälter 10 fällt.

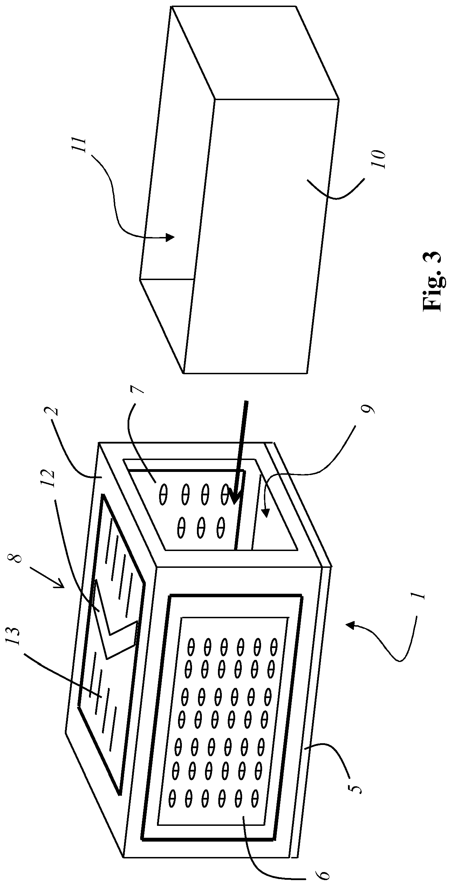

Wenn statt des ersten Zerkleinerungswerkzeugs 1, ein weiteres Zerkleinerungswerkzeug verwendet werden soll, wird der Auffangbehälter 10 zunächst aus dem Basisteil 2 entnommen, das Basisteil so gedreht, dass das zu verwendende weitere Zerkleinerungswerkzeug nach oben ausgerichtet ist, und anschließend der Auffangbehälter 10 wieder mit seiner Einfüllöffnung nach oben ausgerichtet eingeführt. Figur 3 zeigt dies exemplarisch in Bezug auf die Verwendung des als Hobel 8 ausgebildeten weiteren Zerkleinerungswerkzeugs.

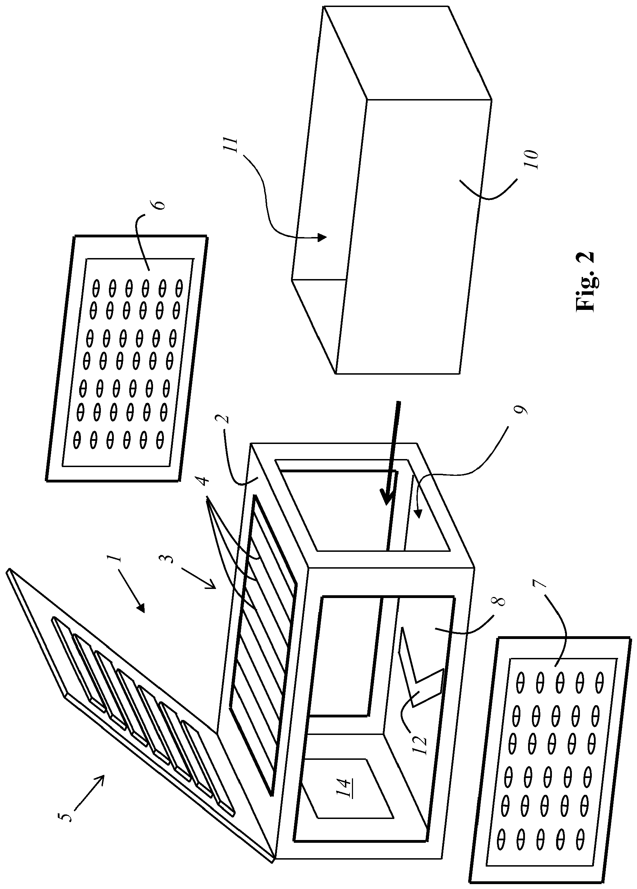

Figur 2 zeigt die Lebensmittelzerkleinerungsvorrichtung mit abgenommener Feinreibe 6 und abgenommener Grobreibe 7. Die Feinreibe 6 und die Grobreibe 7 können, vorzugsweise werkzeug- und zerstörungsfrei, beispielsweise für einen Reinigungsvorgang vorübergehend von dem Basisteil 2 gelöst werden.

In Figur 2 ist auch das in dieser Aufstellausrichtung unten befindliche, in Form eines Hobels 8 ausgebildete weitere Zerkleinerungswerkzeug, das eine Hobelklinge 12 und eine, insbesondere in Figur 3 gut zu erkennende, Gleitbahn 13 aufweist, sichtbar.

Das Basisteil 2 weist auf der der Stirnseite mit der Einführöffnung 9 gegenüberliegenden Stirnseite ein Fenster 14 auf, durch das der Füllstand des vorzugsweise durchsichtigen Auffangbehälters 10 kontrolliert werden kann, ohne dass der Auffangbehälter 10 aus dem Basisteil 2 entnommen werden muss.

Das Basisteil 2 weist vorzugsweise an seinen Ecken jeweils einen in alle drei Raumrichtungen hervorstehenden Standfuß auf. Die Standfüße sind jedoch der besseren Übersichtlichkeit halber nicht eingezeichnet.

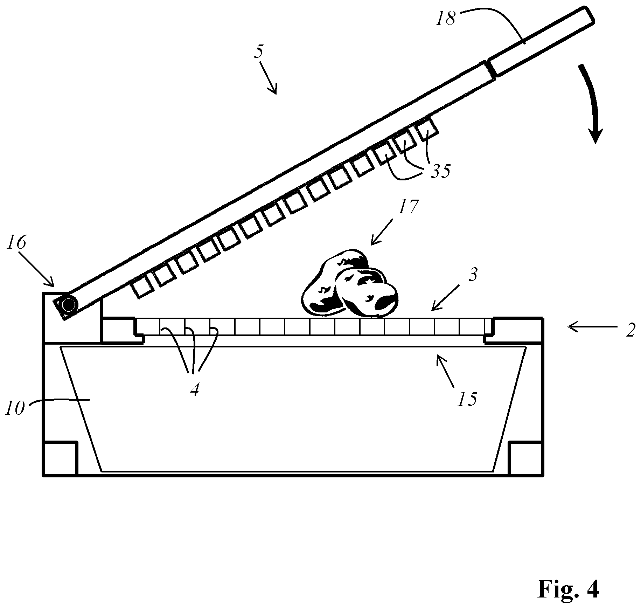

Figur 4 zeigt ein anderes Beispiel einer Lebensmittelzerkleinerungsvorrichtung während eines Zerkleinerungsvorgangs in einer Schnittdarstellung. Die weiteren Zerkleinerungswerkzeuge, die an deren Flächen des Basisteils 2 angeordnet sind, sind der besseren Übersicht halber nicht eingezeichnet. Die in Figur 4 dargestellte Lebensmittelzerkleinerungsvorrichtung weist ein Basisteil 2 auf, das eine Aufnahme 15 für ein Schneidteil 3 hat. Das Basisteil 2 ist mit einem Betätigungsteil 5 mittels einer Gelenkverbindung 16 derart gelenkig verbunden, dass das Betätigungsteil 5 zum Hindurchdrücken von zu zerkleinerndem Lebensmittelgut 17 gegen das Schneidteil 3 geschwenkt werden kann. Das Schneidteil 3 weist mehrere Schneidklingen 4 auf, zwischen die Pressstempel 35 des Betätigungsteils 5 beim Zerkleinerungsvorgang eintauchen. Am freien Ende des Betätigungsteils 5 ist ein Handgriff 18 angeordnet.

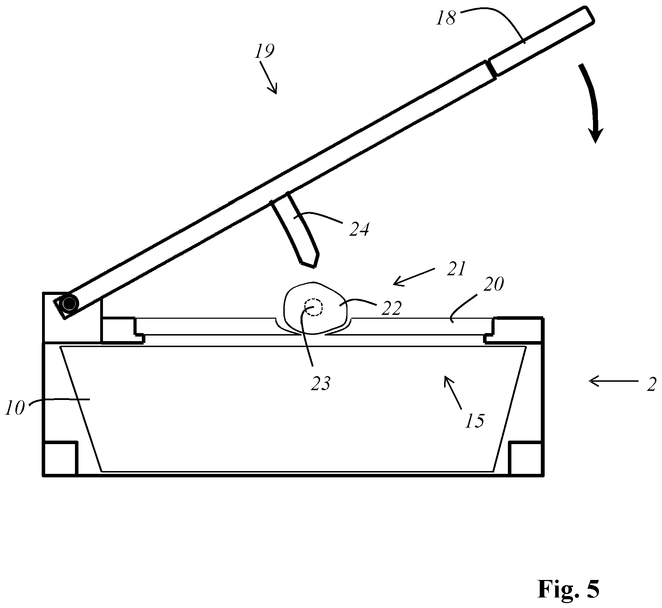

Figur 5 zeigt die Vorrichtung zu Beginn eines Entsteinungsvorganges. Um einen Entsteinungsvorgang durchführen zu können, wurde das Betätigungsteil 5 durch ein weiteres Betätigungsteil 19, das einen Ausdrückdorn 24 aufweist, ersetzt. Hierzu wurde die gelenkige Verbindung 16 des Betätigungsteils 5 mit dem Basisteil 2 gelöst und stattdessen das weitere Betätigungsteil 19 gelenkig mit dem Basisteil 2 verbunden. Darüber hinaus wurde in die Aufnahme 15 anstelle des Schneidteils 3 ein Steinobsthalter 20 eingesetzt, der dazu ausgebildet ist, ein Stück Steinobst 21, wie beispielsweise eine Kirsche 22, das einen herauszudrückenden Stein 23 aufweist, in einer Entsteinungsposition zu halten.

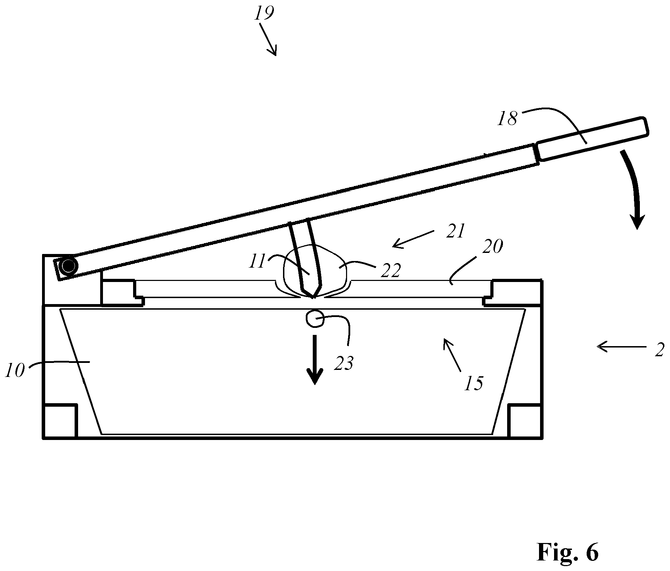

Beim Entsteinungsvorgang wird das weitere Betätigungsteil 19 in Richtung auf das Basisteil 2 geschwenkt, so dass durch die Schwenkbewegung des Ausdrückdornes 24 relativ zu dem Steinobsthalter 20 der Stein 23 des von dem Steinobsthalter 20 gehaltenen Stückes Steinobst 21 aus dem Steinobst 21 herausgedrückt, was in Figur 6 dargestellt ist. Der herausgedrückte Stein 23 fällt dabei in den Auffangbehälter 10. Nach dem Entsteinungsvorgang kann das weitere Betätigungsteil 19 wieder nach oben verschwenkt und das entsteinte Stück Steinobst 21 entnommen werden.

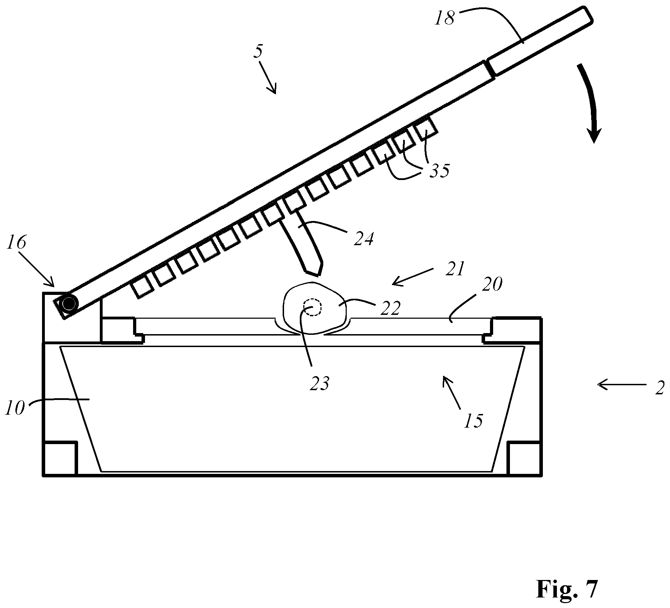

Figur 7 zeigt ein anderes beispiel einer Vorrichtung, bei der der Ausdrückdorn 24 zum Durchführen eines Entsteinungsvorganges an dem Basisteil 5, das die Pressstempel 35 aufweist, mittels einer nicht näher dargestellten Steckverbindung befestigt wird. Der Entsteinungsvorgang selbst vollzieht sich bei diesem Ausführungsbeispiel analog so, wie es in den Figuren 5 und 6 dargestellt ist.

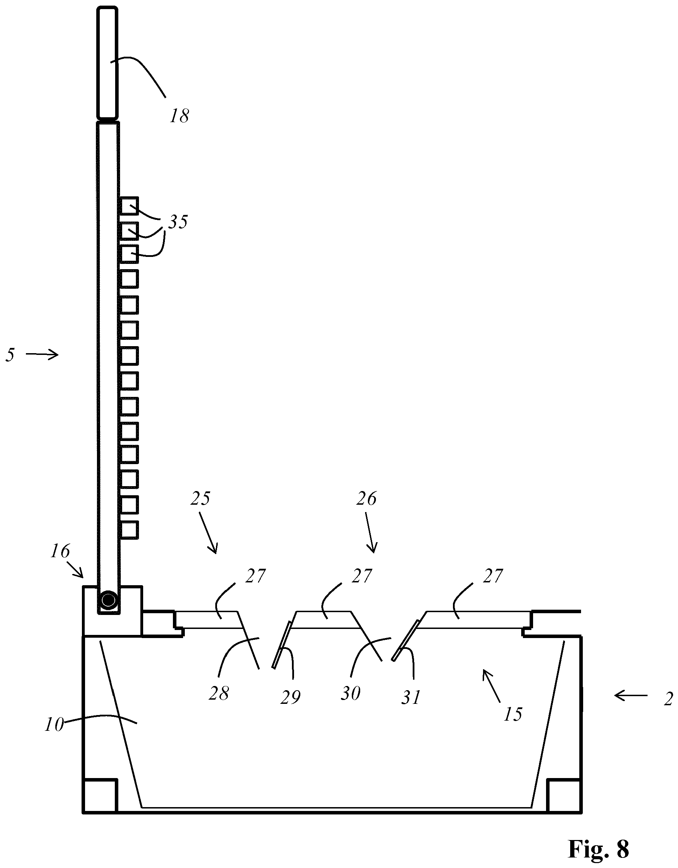

Figur 8 zeigt ein viertes Beispiel einer Lebensmittelzerkleinerungsvorrichtung umgerüstet zum Schneiden von spiralförmigen Girlanden. Im Grundaufbau kann das vierte Ausführungsbeispiel insbesondere so ausgebildet sein, wie das in Fig. 4 dargestellte Ausführungsbeispiel.

Zum Umrüsten für das Schneiden von spiralförmigen Girlanden wurde das Schneidteil 3 aus der Aufnahme 15 entfernt und stattdessen ein Spiralschneider 25 nach Art eines Anspitzers in die Aufnahme 15 eingefügt. Der Spiralschneider 25 weist eine Halteplatte 27 auf, die hinsichtlich Form und Größe dieselbe Außenkontur aufweist wie das Schneidteil 3. Dies ermöglicht es, den Spiralschneider 25 - ohne dass zusätzliche Fixierungsbauteile erforderlich sind - anstelle des Schneidteils 3 in der Aufnahme 15 des Basisteils 2 vorübergehend festzulegen. In der Halteplatte 27 des Spiralschneiders 25 ist außerdem ein weiterer Spiralschneider 26 gehalten.

Der Spiralschneider 25 weist einen kegelförmigen Aufnahmeraum 28 zum Einführen von Lebensmittelgut, wie beispielsweise einer Möhre eines Rettich oder einer Gurke, auf, an dessen Wandung eine Schneidklinge 29 angeordnet ist. Durch Rotieren des in den Aufnahmeraum 28 eingeführten Lebensmittelgutes tritt dessen Spitze in Wirkverbindung mit der Schneidklinge 29, wodurch eine (nicht dargestellte) spiralförmige Girlande spanend abgetrennt wird. Außerdem weist die Wandung des Aufnahmeraums 28 eine (nicht dargestellte) Öffnung auf, durch die hindurch die spiralförmige Girlande aus dem Aufnahmeraum 28 austreten kann. Die spiralförmige Girlande wird automatisch in dem Auffangbehälter 10 aufgefangen.

Der weitere Spiralschneider 26 nach Art eines Anspitzers weist eine andere Größe auf, als der Spiralschneider 25. Außerdem weist der weitere Aufnahmeraum 30 des weiteren Spiralschneiders 26 einen anderen Keilwinkel auf, als der Aufnahmeraum 28 des Spiralschneiders 25. An der Wandung des weiteren Aufnahmeraums 30 ist eine in den weiteren Aufnahmeraum 30 ragende weitere Schneidklinge 31 angeordnet, die von einem Lebensmittelgut, das in dem weiteren Aufnahmeraum um die Rotationsmittelachse des weiteren Aufnahmeraumes 30 rotiert wird, eine (nicht dargestellte) spiralförmige Girlande abtrennt. Auch die Wandung des weiteren Aufnahmeraums 30 weist eine Öffnung auf, durch die hindurch die dort abgetrennte spiralförmige Girlande aus dem weiteren Aufnahmeraum 30 austreten kann und so in den Auffangbehälter 10 gelangt.

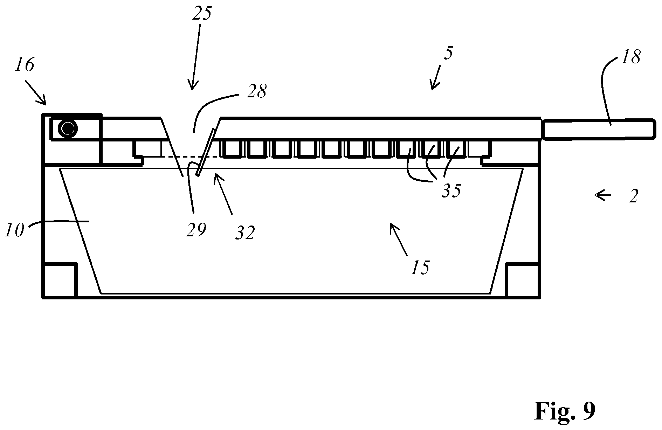

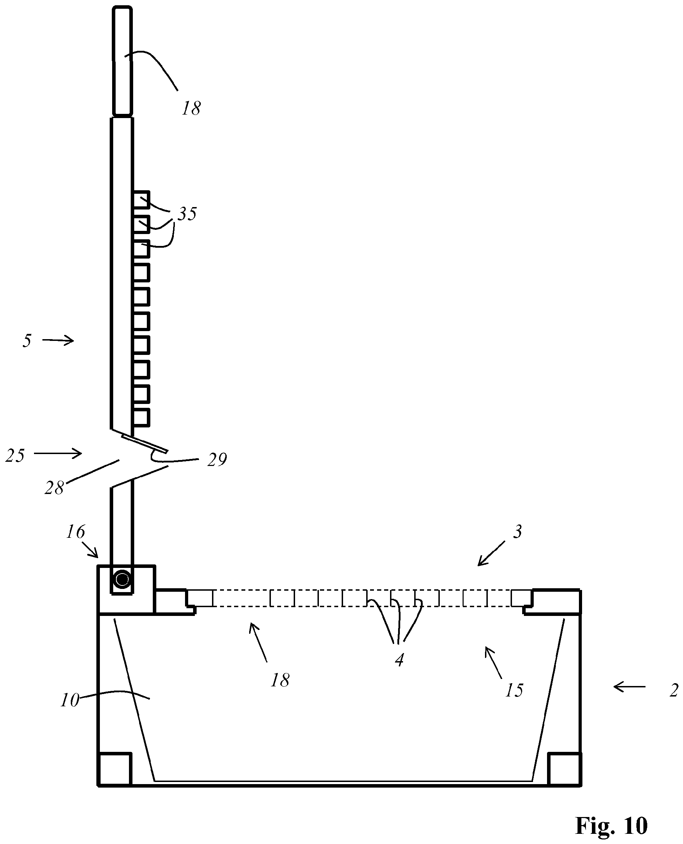

Die Figuren 9 und 10 zeigen ein fünftes Beispiel einer Lebensmittelzerkleinerungsvorrichtung ausgebildet zum Schneiden von spiralförmigen Girlanden. Bei dieser Ausführung ist der Spiralschneider 25 nach Art eines Anspitzers in dem Betätigungsteil 5 angeordnet.

Das Betätigungsteil 5 weist einen ersten Abschnitt mit Pressstempeln 35 auf, die dazu dienen, zu zerkleinerndes Lebensmittelgut durch ein mit Schneidteilklingen 4 versehenes Schneidteil 3 zu drücken, indem das Betätigungsteil 5 gegen das Schneidteil 3 geschwenkt wird. Der Spiralschneider 25 ist in einem zweiten Abschnitt des Betätigungsteils 5 angeordnet.

Das Schneidteil 3 weist bei diesem Ausführungsbeispiel eine Durchgangsöffnung 32 auf, die frei von Schneidteilklingen 4 ist. Ein Teil des Spiralschneiders 25 ragt bei geschlossenem Betätigungsteil 5 durch die Durchgangsöffnung 32 hindurch. Außerdem kann die (nicht dargestellte) abgespante, spiralförmige Girlande durch die Durchgangsöffnung 32 hindurch in den Auffangbehälter 10 gelangen.

Der Spiralschneider 25 weist einen kegelförmigen Aufnahmeraum 28 zum Einführen von Lebensmittelgut, wie beispielsweise einer Möhre eines Rettich oder einer Gurke, auf, an dessen Wandung eine Schneidklinge 29 angeordnet ist. Durch Rotieren des in den Aufnahmeraum 28 eingeführten Lebensmittelgutes tritt dessen Spitze in Wirkverbindung mit der Schneidklinge 29, wodurch die (nicht dargestellte) spiralförmige Girlande spanend abgetrennt wird. Außerdem weist die Wandung des Aufnahmeraums 28 eine (nicht dargestellte) Öffnung auf, durch die hindurch die spiralförmige Girlande aus dem Aufnahmeraum 28 austreten kann.

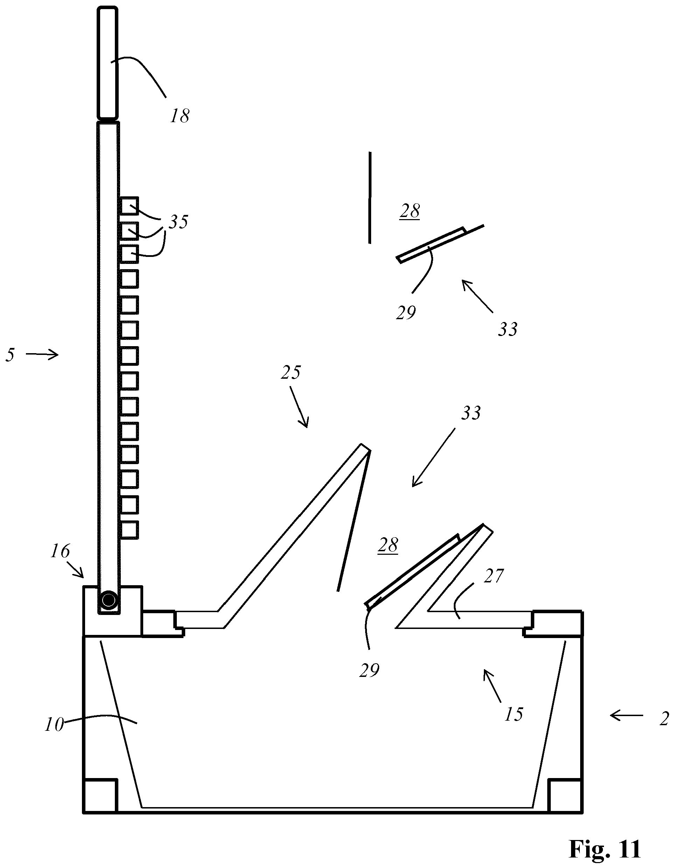

Fig. 11 zeigt ein fünftes beispiel einer Lebensmittelzerkleinerungsvorrichtung ausgebildet zum Schneiden von spiralförmigen Girlanden. Bei diesem Ausführungsbeispiel weist der Spiralschneider 25 eine Halteplatte 27 auf, in die wahlweise wenigstens einer von mehreren unterschiedlichen Schneideinsätzen 33 einfügbar ist. Die Schneideinsätze 33 weisen jeweils einen kegelförmigen, Aufnahmeraum 28 zum Einführen von Lebensmittelgut auf, an dessen Wandung jeweils eine Schneidklinge 29 angeordnet ist und in dem das Lebensmittelgut rotierbar ist. Die Schneideinsätze 33 können sich insbesondere in Bezug auf ihre Form und/oder Größe und/oder in Bezug auf die Dicke und/oder Breite der mit ihnen schneidbaren spiralförmigen Girlanden und/oder in Bezug auf die Anzahl der gleichzeitig bei einem Schneidvorgang entstehenden spiralförmigen Girlanden unterscheiden.

Der jeweils in die Halteplatte 27 eingesetzte Schneideinsatz 33 kann beispielsweise mittels einer Rasteinrichtung oder einer Bajonettbefestigung, insbesondere werkzeuglos, wieder lösbar festgelegt werden.

Die Halteplatte 27 weist hinsichtlich Form und Größe dieselbe Außenkontur auf wie ein in die Aufnahme einfügbares Schneidteil 3. Dies ermöglicht es, den Spiralschneider 25 - ohne dass zusätzliche Fixierungsbauteile erforderlich sind - anstelle eines Schneidteils 3 in der Aufnahme 15 des Basisteils 2 vorübergehend festzulegen. Darüber hinaus weist die Halteplatte einen zylinderförmigen Vorsprung 34 auf, in den jeweils ein Schneideinsatz 33 einfügbar ist.

### Bezugszeichenliste

- 1: Erstes Zerkleinerungswerkzeug
- 2: Basisteil
- 3: Schneidteil
- 4: Schneidklingen
- 5: Betätigungsteil
- 6: Feinreibe
- 7: Grobreibe
- 8: Hobel
- 9: Einführöffnung
- 10: Auffangbehälter
- 11: Einfüllöffnung
- 12: Hobelklinge
- 13: Gleitbahn
- 14: Fenster
- 15: Aufnahme
- 16: Gelenkverbindung
- 17: Lebensmittelgut
- 18: Handgriff
- 19: weiteres Betätigungsteil
- 20: Steinobsthalter
- 21: Steinobst
- 22: Kirsche
- 23: Stein
- 24: Ausdrückdorn
- 25: Spiralschneider
- 26: weiterer Spiralschneider
- 27: Halteplatte
- 28: Aufnahmeraum
- 29: Schneidklinge
- 30: weiterer Aufnahmeraum
- 31: weitere Schneidklinge
- 32: Durchgangsöffnung
- 33: Schneideinsatz
- 34: zylinderförmiger Vorsprung
- 35: Pressstempel

## Patentansprüche

1. Lebensmittelzerkleinerungsvorrichtung, die ein Basisteil (2), ein erstes Zerkleinerungswerkzeug (1), wenigstens ein weiteres Zerkleinerungswerkzeug und einen Auffangbehälter (10) für zerkleinertes Lebensmittelgut aufweist, und bei der wenigstens ein Zerkleinerungswerkzeug oder wenigstens ein Teil eines der Zerkleinerungswerkzeuge wieder lösbar an dem Basisteil (2) festgelegt ist oder festlegbar ist, **dadurch gekennzeichnet, dass** der Auffangbehälter (10) wahlweise in einer ersten Drehstellung, in der er das mit dem ersten Zerkleinerungswerkzeug zerkleinerte Lebensmittelgut auffängt, oder in einer zweiten, von der ersten Drehstellung verschiedenen, Drehstellung, in der er das mit dem zweiten Zerkleinerungswerkzeug zerkleinerte Lebensmittelgut auffängt, in dem Basisteil (2) anordenbar ist.

2. Lebensmittelzerkleinerungsvorrichtung nach Anspruch 1, **dadurch gekennzeichnet, dass** das Basisteil (2) ein Schneidteil (3) trägt und dass die Lebensmittelzerkleinerungsvorrichtung ein gelenkig, insbesondere an dem Basisteil (2), festgelegtes Betätigungsteil (5) aufweist, das zum Hindurchdrücken von zu zerkleinerndem Lebensmittelgut durch das Schneidteil (3) aus einer Einlegestellung gegen das Schneidteil (3) in eine Schließstellung und anschließend von der Schließstellung wieder in die Einlegestellung schwenkbar ist, wobei das Schneidteil (3) und das Betätigungsteil (5) Bestandteile des ersten Zerkleinerungswerkzeugs sind.

3. Lebensmittelzerkleinerungsvorrichtung nach Anspruch 1 oder 2, **dadurch gekennzeichnet, dass** das Basisteil (2) Bestandteil des weiteren Zerkleinerungswerkzeugs ist und/oder an dem Basisteil (2) das wenigstens eine weitere Zerkleinerungswerkzeug festgelegt ist.

4. Lebensmittelzerkleinerungsvorrichtung nach einem der Ansprüche 1 bis 3, **dadurch gekennzeichnet, dass**
a. die Lebensmittelzerkleinerungsvorrichtung als ein weiteres Zerkleinerungswerkzeug einen Hobel (8) aufweist, und/oder dass
b. die Lebensmittelzerkleinerungsvorrichtung als ein weiteres Zerkleinerungswerkzeug eine Reibe aufweist, und/oder dass
c. die Lebensmittelzerkleinerungsvorrichtung als ein weiteres Zerkleinerungswerkzeug eine Grobreibe (7) aufweist, und/oder dass
d. die Lebensmittelzerkleinerungsvorrichtung als ein weiteres Zerkleinerungswerkzeug eine Feinreibe (6) aufweist, und/oder dass
e. die Lebensmittelzerkleinerungsvorrichtung als ein weiteres Zerkleinerungswerkzeug einen Spiralschneider, insbesondere nach Art eines Anspitzers, aufweist, und/oder dass
f. die Lebensmittelzerkleinerungsvorrichtung als ein weiteres Zerkleinerungswerkzeug einen Entsteiner zum Entsteinen von Steinobst aufweist.

5. Lebensmittelzerkleinerungsvorrichtung nach einem der Ansprüche 1 bis 4, **dadurch gekennzeichnet, dass**
a. das weitere Zerkleinerungswerkzeug aus Bauteilen gebildet ist, die von dem Schneidteil (3) und dem Betätigungsteil (5) verschieden sind, oder dass
b. das wenigstens eine weitere Zerkleinerungswerkzeug keine Bauteile mit dem ersten Zerkleinerungswerkzeug gemeinsam hat, oder dass
c. das Basisteil (2) gleichzeitig sowohl Bestandteil des ersten Zerkleinerungswerkzeugs, als auch des weiteren Zerkleinerungswerkzeugs ist, oder dass
d. das wenigstens eine weitere Zerkleinerungswerkzeug ausschließlich das Basisteil (2) mit dem ersten Zerkleinerungswerkzeug gemeinsam hat, oder dass
e. das erste und/oder das weitere Zerkleinerungswerkzeug, vorzugsweise werkzeug- und zerstörungsfrei wieder lösbar, an dem Basisteil (2) festgelegt sind oder festlegbar sind, oder dass
f. die Zerkleinerungswerkzeuge unabhängig voneinander betreibbar sind.

6. Lebensmittelzerkleinerungsvorrichtung nach einem der Ansprüche 1 bis 5, **dadurch gekennzeichnet, dass**
a. das Basisteil (2) als Vielflächner ausgebildet ist und/oder als äußere Kontur die eines Vielflächners aufweist, oder dass
b. das Basisteil (2) als Quader ausgebildet ist und/oder als äußere Kontur die eines Quaders aufweist, und/oder dass
c. das Basisteil (2) als Rahmen ausgebildet ist, der als äußere Kontur die eines Vielflächners aufweist, und/oder dass
d. das Basisteil (2) als Rahmen ausgebildet ist, der als äußere Kontur die eines Quaders aufweist.

7. Lebensmittelzerkleinerungsvorrichtung nach Anspruch 6, **dadurch gekennzeichnet, dass**
a. die Zerkleinerungswerkzeuge separat voneinander jeweils an und in einer der unterschiedlichen Flächen des Basisteils angeordnet sind oder anordenbar sind, und/oder dass
b. wenigstens ein Zerkleinerungswerkzeug an oder in einer der unterschiedlichen Flächen des Basisteils angeordnet ist und die der Fläche gegenüberliegende Fläche als, insbesondere mit Standfüßen versehene, Aufstellfläche ausgebildet ist, auf die das Basisteil (2) zur Benutzung des Zerkleinerungswerkzeugs aufstellbar ist, und/oder dass
c. wenigstens ein Zerkleinerungswerkzeug an oder in einer der unterschiedlichen Flächen des Basisteils angeordnet ist und die der Fläche gegenüberliegende Fläche als, insbesondere mit Standfüßen versehene, Aufstellfläche ausgebildet ist, auf die das Basisteil (2) zur Benutzung des Zerkleinerungswerkzeugs aufstellbar ist, wobei die Aufstellfläche ein anderes Zerkleinerungswerkzeug aufweist.

8. Lebensmittelzerkleinerungsvorrichtung nach einem der Ansprüche 1 bis 7, **dadurch gekennzeichnet, dass**
a. wenigstens ein Zerkleinerungswerkzeug oder wenigstens ein Teil eines der Zerkleinerungswerkzeuge werkzeugfrei und/oder zerstörungsfrei lösbar an dem Basisteil (2) festgelegt ist oder festlegbar ist, und/oder dass
b. mehrere Zerkleinerungswerkzeuge oder jeweils wenigstens Teile unterschiedlicher Zerkleinerungswerkzeuge, insbesondere unabhängig voneinander, lösbar an dem Basisteil (2) festgelegt sind oder festlegbar sind, und/oder dass
c. wenigstens ein weiteres Zerkleinerungswerkzeug oder wenigstens ein Teil eines weiteren Zerkleinerungswerkzeugs, lösbar an dem Basisteil (2) festgelegt ist oder festlegbar ist und/oder dass
d. wenigstens ein Rastelement zum lösbaren Festlegen des Zerkleinerungswerkzeugs oder des weiteren Zerkleinerungswerkzeugs oder eines Bauteils des Zerkleinerungswerkzeugs oder eines Bauteils des weiteren Zerkleinerungswerkzeugs vorhanden ist, und/oder dass
e. eine Verriegelungsvorrichtung vorhanden ist, mit der das Betätigungsteil (5) in der Schließstellung fixierbar ist, und/oder dass
f. wenigstens ein Zerkleinerungswerkzeug unlösbar an dem Basisteil (2) angeordnet ist oder wenigstens teilweise einstückig mit dem Basisteil (2) hergestellt ist.

9. Lebensmittelzerkleinerungsvorrichtung nach einem der Ansprüche 1 bis 8, **dadurch gekennzeichnet, dass**
a. die Lebensmittelzerkleinerungsvorrichtung einen Steinobsthalter zum Halten wenigsten eines Stückes Steinobst und wenigstens einen Ausdrückdorn aufweist, so dass durch eine Schwenkbewegung des Ausdrückdornes relativ zu dem Steinobsthalter der Stein eines von dem Steinobsthalter gehaltenen Stückes Steinobst aus dem Steinobst herausdrückbar ist, oder dass
b. die Lebensmittelzerkleinerungsvorrichtung einen Steinobsthalter zum Halten wenigsten eines Stückes Steinobst und wenigstens einen Ausdrückdorn aufweist, so dass durch eine Schwenkbewegung des Ausdrückdornes relativ zu dem Steinobsthalter der Stein eines von dem Steinobsthalter gehaltenen Stückes Steinobst aus dem Steinobst herausdrückbar ist, wobei der Ausdrückdorn an dem Betätigungsteil festgelegt ist oder an dem Betätigungsteil festlegbar ist, oder dass
c. die Lebensmittelzerkleinerungsvorrichtung einen Steinobsthalter zum Halten wenigsten eines Stückes Steinobst und wenigstens einen Ausdrückdorn aufweist, so dass durch eine Schwenkbewegung des Ausdrückdornes relativ zu dem Steinobsthalter der Stein eines von dem Steinobsthalter gehaltenen Stückes Steinobst aus dem Steinobst herausdrückbar ist, wobei ein weiteres Betätigungsteil vorhanden ist, das den Ausdrückdorn aufweist und das anstelle des Betätigungsteils an dem Basisteil (2) gelenkig festlegbar ist.

10. Vorrichtung nach einem der Ansprüche 1 bis 9, **dadurch gekennzeichnet, dass**
a. das Basisteil (2) eine Aufnahme aufweist, in die wahlweise, insbesondere passgenau und/oder verrastend, das Schneidteil (3) oder ein Steinobsthalter oder ein Spiralschneider, einsetzbar ist, und/oder dass
b. das Basisteil (2) eine Aufnahme aufweist, in die wahlweise, insbesondere passgenau und/oder verrastend, das Schneidteil (3) oder ein Steinobsthalter oder ein Spiralschneider, einsetzbar ist, wobei der Spiralschneider eine Halteplatte aufweist, die hinsichtlich Form und Größe dieselbe Außenkontur aufweist, wie das Schneidteil (3) und/oder dass der Steinobsthalter eine Halteplatte aufweist, die hinsichtlich Form und Größe dieselbe Außenkontur aufweist, wie das Schneidteil (3).

11. Lebensmittelzerkleinerungsvorrichtung nach einem der Ansprüche 1 bis 10, **dadurch gekennzeichnet, dass**
a. das Basisteil (2) eine Aufnahme für den Auffangbehälter (10) aufweist, die eine Befestigungsvorrichtung zum vorübergehenden Festlegen des Auffangbehälters aufweist, und/oder dass
b. der Auffangbehälter (10) in dem Basisteil (2) derart anordenbar, insbesondere einschiebbar, ist, dass er das zerkleinerte Lebensmittelgut automatisch auffängt, und/oder dass
c. das Basisteil (2) wenigsten ein Fenster (14) aufweist, durch das der in dem Basisteil (2) angeordnete Auffangbehälter (10) und/oder Füllstand des in dem Basisteil (2) angeordnete Auffangbehälters sichtbar ist.

12. Lebensmittelzerkleinerungsvorrichtung nach einem der Ansprüche 1 bis 11, **dadurch gekennzeichnet, dass**
a. die Lebensmittelzerkleinerungsvorrichtung dazu ausgebildet ist, für einen Zerkleinerungsvorgang auf einer Arbeitsplatte, beispielsweise einer Küchentischplatte, aufgestellt zu werden, und/oder dass
b. die Lebensmittelzerkleinerungsvorrichtung dazu ausgebildet ist, für einen Zerkleinerungsvorgang wahlweise in einer von mehreren unterschiedlichen Aufstellausrichtungen auf einer Arbeitsplatte, beispielsweise einer Küchentischplatte, aufgestellt zu werden, und/oder dass
c. die Lebensmittelzerkleinerungsvorrichtung dazu ausgebildet ist, für einen Zerkleinerungsvorgang mit dem ersten Zerkleinerungswerkzeug in einer ersten Aufstellausrichtung und für einen Zerkleinerungsvorgang mit dem weiteren Zerkleinerungswerkzeug in einer weiteren, von der ersten Aufstellausrichtung verschiedenen, Aufstellausrichtung auf einer Arbeitsplatte, beispielsweise einer Küchentischplatte, aufgestellt zu werden.
d. jedem Zerkleinerungswerkzeug eine von mehreren unterschiedlichen Aufstellausrichtungen zugeordnet ist und dass die Lebensmittelzerkleinerungsvorrichtung dazu ausgebildet ist, für einen Zerkleinerungsvorgang mit einem der Zerkleinerungswerkzeuge in der dem Zerkleinerungswerkzeug zugeordneten Aufstellausrichtung auf einer Arbeitsplatte, beispielsweise einer Küchentischplatte, aufgestellt zu werden.

13. Lebensmittelzerkleinerungsvorrichtung nach einem der Ansprüche 1 bis 12, **dadurch gekennzeichnet, dass**
a. die Lebensmittelzerkleinerungsvorrichtung Standfüße zum Aufstellen der Lebensmittelzerkleinerungsvorrichtung in unterschiedlichen Aufstellausrichtungen aufweist, und/oder dass
b. das Basisteil (2) Standfüße aufweist, und/oder dass
c. Standfüße vorhanden sind, die aus einem elastischen Material und/oder aus einem Material mit hoher Haftreibung, insbesondere aus Gummi, hergestellt sind, und/oder dass
d. das Basisteil (2) über die Zerkleinerungswerkezuge hervorstehende Standfüße aufweist.

14. Lebensmittelzerkleinerungsvorrichtung nach Anspruch 13, **dadurch gekennzeichnet, dass**
a. wenigstens ein Standfuß derart angeordnet ist, dass er für unterschiedliche Aufstellausrichtungen verwendbar ist, und/oder dass
b. die Standfüße an den Kanten und/oder entlang der Kanten des, insbesondere als Vielflächner oder Quader ausgebildeten, Basisteils angeordnet sind, und/oder dass
c. die Standfüße an den Ecken des, insbesondere als Vielflächner oder Quader ausgebildeten, Basisteils angeordnet sind, und/oder dass
d. das Basisteil (2) Standfüße aufweist, die ausschließlich zum Aufstellen in einer einzigen der möglichen Aufstellausrichtungen dienen, und/oder dass
e. das Basisteil (2) auf wenigstens einer seiner Flächen Standfüße aufweist,

15. Lebensmittelzerkleinerungsvorrichtung nach einem der Ansprüche 1 bis 14, **dadurch gekennzeichnet, dass**
a. das Basisteil (2) als Spritzgussteil, insbesondere als Kunststoffspritzgussteil, hergestellt ist, oder dass das Basisteil (2) wenigstens ein als Spritzgussteil, insbesondere als Kunststoffspritzgussteil, hergestelltes Bauteil aufweist, oder dass das Basisteil (2) aus mehreren, insbesondere als Spritzgussteile, insbesondere als Kunststoffspritzgussteile hergestellten, Bauteilen zusammengesetzt ist, und/oder dass
b. das Basisteil (2) als äußere Kontur die eines Quaders aufweist und dass an einer Stirnfläche eine Öffnung zum Einschieben eines Auffangbehälters vorhanden ist und dass an einer der Seitenflächen, die der Stirnfläche benachbart ist, das Schneidteil (3) angeordnet ist und dass an den weiteren Seitenflächen, die der Stirnfläche benachbart sind, jeweils ein weiteres Zerkleinerungswerkzeug angeordnet ist.

## Claims

1. Food comminution device which has a base part (2), a first comminution tool (1), at least one further comminution tool and a collecting container (10) for comminuted food items, and in which at least one comminution tool or at least a part of one of the comminution tools is detachably fixed or fixable to the base part (2), **characterized in that** the collecting container (10) can be arranged in the base part (2) selectively in a first rotational position, in which said collecting container (10) collects food items comminuted by way of the first comminution tool, or in a second rotational position, which differs from the first rotational position and in which said collecting container (10) collects food items comminuted by way of the second comminution tool.

2. Food comminution device according to Claim 1, **characterized in that** the base part (2) bears a cutting part (3), and **in that** the food comminution device has an actuation part (5), which actuation part (5) is articulatedly fixed in particular to the base part (2) and can be pivoted from a loading position toward the cutting part (3) into a closed position in order to push food items for comminution through the cutting part (3) and can subsequently be pivoted from the closed position into the loading position again, wherein the cutting part (3) and the actuation part (5) are constituent parts of the first comminution tool.

3. Food comminution device according to Claim 1 or 2, **characterized in that** the base part (2) is a constituent part of the further comminution tool, and/or the at least one further comminution tool is fixed to the base part (2).

4. Food comminution device according to one of Claims 1 to 3, **characterized in that**
a. the food comminution device has a slicer (8) as a further comminution tool, and/or **in that**
b. the food comminution device has a grater as a further comminution tool, and/or **in that**
c. the food comminution device has a coarse grater (7) as a further comminution tool, and/or **in that**
d. the food comminution device has a fine grater (6) as a further comminution tool, and/or **in that**
e. the food comminution device has a spiral cutter, in particular in the form of a sharpener, as a further comminution tool, and/or **in that**
f. the food comminution device has a pitting means for the pitting of stone fruit as a further comminution tool.

5. Food comminution device according to one of Claims 1 to 4, **characterized in that**
a. the further comminution tool is formed from components which differ from the cutting part (3) and the actuation part (5), or **in that**
b. the at least one further comminution tool has no components in common with the first comminution tool, or **in that**
c. the base part (2) is simultaneously a constituent part both of the first comminution tool and of the further comminution tool, or **in that**
d. the at least one further comminution tool has only the base part (2) in common with the first comminution tool, or **in that**
e. the first and/or the further comminution tool are fixed or fixable to the base part (2) so as to be detachable preferably without the use of tools and non-destructively, or **in that**
f. the comminution tools are operable independently of one another.

6. Food comminution device according to one of Claims 1 to 5, **characterized in that**
a. the base part (2) is in the form of a polyhedron, and/or has, as its outer contour, the outer contour of a polyhedron, or **in that**
b. the base part (2) is in the form of a cuboid, and/or has, as its outer contour, the outer contour of a cuboid, and/or **in that**
c. the base part (2) is in the form of a frame which has, as its outer contour, the outer contour of a polyhedron, and/or **in that**
d. the base part (2) is in the form of a frame which has, as its outer contour, the outer contour of a cuboid.

7. Food comminution device according to Claim 6, **characterized in that**
a. the comminution tools are arranged or arrangeable separately from one another in each case on and in one of the different surfaces of the base part, and/or **in that**
b. at least one comminution tool is arranged on or in one of the different surfaces of the base part, and that surface which is situated opposite the surface is formed as a setting-down surface which is equipped in particular with supporting feet and onto which the base part (2) can be set down in order for the comminution tool to be used, and/or **in that**
c. at least one comminution tool is arranged on or in one of the different surfaces of the base part, and that surface which is situated opposite the surface is formed as a setting-down surface which is equipped in particular with supporting feet and onto which the base part (2) can be set down in order for the comminution tool to be used, wherein the setting-down surface has another comminution tool.

8. Food comminution device according to one of Claims 1 to 7, **characterized in that**
a. at least one comminution tool or at least a part of one of the comminution tools is fixed or fixable to the base part (2) so as to be detachable without the use of tools and/or non-destructively, and/or **in that**
b. multiple comminution tools or in each case at least parts of different comminution tools are detachably fixed or fixable, in particular independently of one another, to the base part (2), and/or **in that**
c. at least one further comminution tool or at least a part of one further comminution tool is detachably fixed or fixable to the base part (2) and/or **in that**
d. at least one detent element is provided for the detachable fixing of the comminution tool or of the further comminution tool or of a component of the comminution tool or of a component of the further comminution tool, and/or **in that**
e. a locking device is provided by means of which the actuation part (5) can be fixed in the closed position, and/or **in that**
f. at least one comminution tool is arranged non-detachably on the base part (2) or is at least partially produced integrally with the base part (2).

9. Food comminution device according to one of Claims 1 to 8, **characterized in that**
a. the food comminution device has a stone fruit holder for holding at least one piece of stone fruit, and has at least one pushing-out spike such that, by means of a pivoting movement of the pushing-out spike relative to the stone fruit holder, the stone of a piece of stone fruit held by the stone fruit holder can be pushed out of the stone fruit, or **in that**
b. the food comminution device has a stone fruit holder for holding at least one piece of stone fruit, and has at least one pushing-out spike such that, by means of a pivoting movement of the pushing-out spike relative to the stone fruit holder, the stone of a piece of stone fruit held by the stone fruit holder can be pushed out of the stone fruit, wherein the pushing-out spike is fixed to the actuation part or fixable to the actuation part, or **in that**
c. the food comminution device has a stone fruit holder for holding at least one piece of stone fruit, and has at least one pushing-out spike such that, by means of a pivoting movement of the pushing-out spike relative to the stone fruit holder, the stone of a piece of stone fruit held by the stone fruit holder can be pushed out of the stone fruit, wherein a further actuation part is provided which has the pushing-out spike and which is articulatedly fixable to the base part (2) instead of the actuation part.

10. Device according to one of Claims 1 to 9, **characterized in that**
a. the base part (2) has a receptacle into which the cutting part (3) or a stone fruit holder or a spiral cutter can be selectively inserted, in particular in an accurately fitting manner and/or with detent action, and/or **in that**
b. the base part (2) has a receptacle into which the cutting part (3) or a stone fruit holder or a spiral cutter can be selectively inserted, in particular in an accurately fitting manner and/or with detent action, wherein the spiral cutter has a holding plate which, in terms of shape and size, has the same outer contour as the cutting part (3), and/or **in that** the stone fruit holder has a holding plate which, in terms of shape and size, has the same outer contour as the cutting part (3).

11. Food comminution device according to one of Claims 1 to 10, **characterized in that**
a. the base part (2) has a receptacle for the collecting container (10), which receptacle has a fastening device for the temporary fixing of the collecting container, and/or **in that**
b. the collecting container (10) can be arranged in, in particular slid into, the base part (2) in such a way that it automatically collects the comminuted food items, and/or **in that**
c. the base part (2) has at least one window (14) through which the collecting container (10) arranged in the base part (2), and/or the fill level of the collecting container arranged in the base part (2), can be viewed.

12. Food comminution device according to one of Claims 1 to 11, **characterized in that**
a. the food comminution device is designed to be set down on a worktop, for example on a kitchen tabletop, for a comminution process and/or **in that**
b. the food comminution device is designed to be set down on a worktop, for example on a kitchen tabletop, selectively in one of several different setting-down orientations for a comminution process, and/or **in that**
c. the food comminution device is designed to be set down on a worktop, for example on a kitchen tabletop, in a first setting-down orientation for a comminution process using the first comminution tool and in a further setting-down orientation, which differs from the first setting-down orientation, for a comminution process using the further comminution tool,
d. each comminution tool is assigned one of several different setting-down orientations, and **in that** the food comminution device is designed to be set down on a worktop, for example on a kitchen tabletop, in the setting-down orientation assigned to one of the comminution tools for a comminution process using that comminution tool.

13. Food comminution device according to one of Claims 1 to 12, **characterized in that**
a. the food comminution device has supporting feet for the setting-down of the food comminution device in different setting-down orientations, and/or **in that**
b. the base part (2) has supporting feet, and/or in that
c. supporting feet are provided which are produced from an elastic material and/or from a material with high static friction, in particular from rubber, and/or **in that**
d. the base part (2) has supporting feet which project beyond the comminution tools.

14. Food comminution device according to Claim 13, **characterized in that**
a. at least one supporting foot is arranged such that it can be used for different setting-down orientations, and/or **in that**
b. the supporting feet are arranged at the edges and/or along the edges of the base part, which is in particular in the form of a polyhedron or cuboid, and/or **in that**
c. the supporting feet are arranged at the corners of the base part, which is in particular in the form of a polyhedron or cuboid, and/or **in that**
d. the base part (2) has supporting feet which serve exclusively for setting down in a single one of the possible setting-down orientations, and/or **in that**
e. the base part (2) has supporting feet on at least one of its surfaces.

15. Food comminution device according to one of Claims 1 to 14, **characterized in that**
a. the base part (2) is produced as an injection-moulded part, in particular as a plastics injection-moulded part, or **in that** the base part (2) has at least one component produced as an injection-moulded part, in particular as a plastics injection-moulded part, or **in that** the base part (2) is assembled from multiple components which are produced in particular as injection-moulded parts, in particular as plastics injection-moulded parts, and/or **in that**
b. the base part (2) has the outer contour of a cuboid as its outer contour, and **in that**, on one face surface, there is provided an opening for the sliding-in of a collecting container, and **in that** the cutting part (3) is arranged on one of the side surfaces that is adjacent to the face surface, and **in that** in each case one further comminution tool is arranged on the further side surfaces that are adjacent to the face surface.

## Revendications

1. Dispositif de broyage des aliments, lequel présente une partie de base (2), un premier outil de broyage (1), au moins un autre outil de broyage ainsi qu'un bac de récupération (10) pour la matière alimentaire broyée, et pour lequel au moins un outil de broyage ou au moins une partie de l'un des outils de broyage est mis(e) en place, ou peut être mis (e) en place de manière à pouvoir être retirée de nouveau, au niveau de la partie de base (2), **caractérisé en ce que** le bac de récupération (10) peut être disposé dans la partie de base (2), ce de manière sélective dans une première position de rotation, dans laquelle il recueille la matière alimentaire broyée au moyen du premier outil de broyage, d'une part, ou dans une deuxième position de rotation, laquelle est différente de la première position de rotation, dans laquelle il recueille la matière alimentaire broyée au moyen du deuxième outil de broyage, d'autre part.

2. Dispositif de broyage des aliments selon la revendication 1, **caractérisé en ce que** la partie de base (2) supporte une pièce de coupe (3) et **caractérisé en ce que** le dispositif destiné à broyer des aliments présente une pièce de manoeuvre (5) mise en place de manière articulée, en particulier au niveau de la partie de base (2), laquelle pièce de manoeuvre est capable de pivoter, en vue de pousser de la matière alimentaire devant être broyée à travers la pièce de coupe (3), à partir d'une position d'insertion contre la pièce de coupe (3) dans une position de fermeture, d'une part, puis en sens inverse, de la position de fermeture dans la position d'insertion, la pièce de coupe (3) et la pièce de manoeuvre (5) étant des parties intégrantes du premier outil de broyage.

3. Dispositif de broyage des aliments selon la revendication 1 ou 2, **caractérisé en ce que** la partie de base (2) est une partie intégrante de l'autre outil de broyage et / ou l'au moins un autre outil de broyage est mis en place au niveau de la partie de base (2).

4. Dispositif de broyage des aliments selon l'une des revendications 1 à 3, **caractérisé en ce que** :
a. le dispositif de broyage des aliments présente une trancheuse (8) qui fait partie de l'un des autres outils de broyage ; et / ou **en ce que**
b. le dispositif de broyage des aliments présente une râpe qui fait partie de l'un des autres outils de broyage ; et / ou **en ce que**
c. le dispositif de broyage des aliments présente une grosse râpe (7) qui fait partie de l'un des autres outils de broyage ; et / ou **en ce que**
d. le dispositif de broyage des aliments présente une râpe fine (6) qui fait partie de l'un des autres outils de broyage ; et / ou **en ce que**
e. le dispositif de broyage des aliments présente une lame à découper en spirale, en particulier du type d'un taille-crayon, qui fait partie de l'un des autres outils de broyage ; et / ou **en ce que**
f. le dispositif de broyage des aliments présente un système de dénoyauteur, destiné au dénoyautage des fruits à noyau et qui fait partie de l'un des autres outils de broyage.

5. Dispositif de broyage des aliments selon l'une des revendications 1 à 4, **caractérisé en ce que** :
a. l'autre outil de broyage est formé de parties qui sont différentes de la pièce de coupe (3) et de la pièce de manoeuvre (5) ; ou **en ce que**
b. l'au moins un autre outil de broyage ne possède aucune partie en commun avec le premier outil de broyage ; ou **en ce que**
c. la partie de base (2) est, en même temps, aussi bien une partie intégrante du premier outil de broyage qu'une partie intégrante de l'autre outil de broyage ; ou **en ce que**
d. l'au moins un autre outil de broyage possède exclusivement la partie de base (2) en commun avec le premier outil de broyage ; ou **en ce que**
e. le premier outil et / ou l'autre outil de broyage sont mis en place ou peuvent être mis en place au niveau de la partie de base (2), de préférence sans outil et de manière non destructive, de manière à pouvoir être retirés de nouveau ; ou **en ce que**
f. les outils de broyage peuvent être utilisés indépendamment les uns des autres.

6. Dispositif de broyage des aliments selon l'une des revendications 1 à 5, **caractérisé en ce que** :
a. la partie de base (2) est conçue en tant que polyèdre et / ou en tant que contour extérieur qui présente un polyèdre ; ou **en ce que**
b. la partie de base (2) est conçue en tant que parallélépipède et / ou en tant que contour extérieur qui présente un parallélépipède ; et / ou **en ce que**
c. la partie de base (2) est conçue en tant que châssis, lequel présente le contour d'un polyèdre en tant que contour extérieur ; et / ou **en ce que**
d. la partie de base (2) est conçue en tant que châssis, lequel présente le contour d'un parallélépipède en tant que contour extérieur.

7. Dispositif de broyage des aliments selon la revendication 6, **caractérisé en ce que** :
a. les outils de broyage sont disposés ou peuvent être disposés de manière séparée les uns des autres, respectivement au niveau de l'une et dans l'une des diverses surfaces de la partie de base ; et / ou **en ce que**
b. au moins un outil de broyage est disposé au niveau de l'une ou dans l'une des diverses surfaces de la partie de base et la surface se trouvant à l'opposé de la surface est conçue comme une surface de montage, pourvue en particulier de pieds de support, sur laquelle la partie de base (2) peut être installée en vue de l'utilisation de l'outil de broyage ; et / ou **en ce que**
c. au moins un outil de broyage est disposé au niveau de l'une ou dans l'une des diverses surfaces de la partie de base et la surface se trouvant à l'opposé de la surface est conçue comme une surface de montage, pourvue en particulier de pieds de support, sur laquelle la partie de base (2) peut être installée en vue de l'utilisation de l'outil de broyage, la surface de montage présentant un autre outil de broyage.

8. Dispositif de broyage des aliments selon l'une des revendications 1 à 7, **caractérisé en ce que** :
a. au moins un outil de broyage ou au moins une partie de l'un des outils de broyage est mis (e) en place ou peut être mis (e) en place de manière amovible, sans outil et / ou de manière non destructive, au niveau de la partie de base (2) ; et / ou **en ce que**
b. plusieurs outils de broyage ou respectivement au moins des parties des différents outils de broyage sont mis(es) en place ou peuvent être mis(es) en place, en particulier indépendamment les un(e)s des autres, de manière amovible au niveau de la partie de base (2) ; et / ou **en ce que**
c. au moins un autre outil de broyage ou au moins une partie d'un autre outil de broyage est mis (e) en place ou peut être mis (e) en place de manière amovible au niveau de la partie de base (2) ; et / ou **en ce que**
d. au moins un élément d'encliquetage est présent en vue de la mise en place de manière amovible de l'outil de broyage ou de l'autre outil de broyage ou d'une partie de l'outil de broyage ou d'une partie de l'autre outil de broyage ; et / ou **en ce que**
e. un dispositif de verrouillage est présent, au moyen duquel la pièce de manoeuvre (5) peut être fixée dans la position de fermeture ; et / ou **en ce que**
f. au moins un outil de broyage est disposé de manière inamovible au niveau de la partie de base (2) ou est fabriqué, tout au moins en partie, d'une seule pièce avec la partie de base (2).

9. Dispositif de broyage des aliments selon l'une des revendications 1 à 8, **caractérisé en ce que** :
a. le dispositif de broyage des aliments présente un support pour fruits à noyau en vue de maintenir en place au moins un fruit à noyau et présente au moins un mandrin d'éjection, de telle sorte que le noyau d'un fruit à noyau maintenu en place par le support pour fruits à noyau peut être extrait hors du fruit à noyau par un mouvement de pivotement du mandrin d'éjection par rapport au support pour fruits à noyau ; ou **en ce que**
b. le dispositif de broyage des aliments présente un support pour fruits à noyau en vue de maintenir en place au moins un fruit à noyau et présente au moins un mandrin d'éjection, de telle sorte que le noyau d'un fruit à noyau maintenu en place par le support pour fruits à noyau peut être extrait hors du fruit à noyau par un mouvement de pivotement du mandrin d'éjection par rapport au support pour fruits à noyau, le mandrin d'éjection étant mis en place au niveau de la pièce de manoeuvre ou pouvant être mis en place au niveau de la pièce de manoeuvré ; ou **en ce que**
c. le dispositif de broyage des aliments présente un support pour fruits à noyau en vue de maintenir en place au moins un fruit à noyau et présente au moins un mandrin d'éjection, de telle sorte que le noyau d'un fruit à noyau maintenu en place par le support pour fruits à noyau peut être extrait hors du fruit à noyau par un mouvement de pivotement du mandrin d'éjection par rapport au support pour fruits à noyau, une autre pièce de manoeuvre étant présente, laquelle présente le mandrin d'éjection et laquelle peut être mise en place de manière articulée au niveau de la partie de base (2) au lieu de la pièce de manoeuvré.

10. Dispositif selon l'une des revendications 1 à 9, **caractérisé en ce que** :
a. la partie de base (2) présente un logement, dans laquelle la pièce de coupe (3) ou un support pour fruits à noyau ou une lame à découper en spirale peut être inséré(e) de manière sélective, en particulier dans un parfait ajustement et / ou par un mécanisme d'encliquetage ; et / ou **en ce que**
b. la partie de base (2) présente un logement, dans laquelle la pièce de coupe (3) ou un support pour fruits à noyau ou une lame à découper en spirale peut être inséré(e) de manière sélective, en particulier dans un parfait ajustement et / ou par un mécanisme d'encliquetage, la lame à découper en spirale présentant une plaque de retenue qui, au regard de la forme et de la taille, présente le même contour extérieur que la pièce de coupe (3) et / ou **caractérisé en ce que** le support pour fruits à noyau présente une plaque de retenue qui, au regard de la forme et de la taille, présente le même contour extérieur que la pièce de coupe (3).

11. Dispositif de broyage des aliments selon l'une des revendications 1 à 10, **caractérisé en ce que** :
a. la partie de base (2) présente un logement pour le bac de récupération (10), lequel logement présente une dispositif de fixation destiné à la mise en place provisoire du bac de récupération ; et / ou **en ce que**
b. le bac de récupération (10) peut être disposé, en particulier peut être inséré dans la partie de base (2) de telle sorte qu'il recueille automatiquement la matière alimentaire broyée ; et / ou **en ce que**
c. la partie de base (2) présente au moins un regard (14), au travers duquel le bac de récupération (10) disposé dans la partie de base (2) et / ou le niveau de remplissage du bac de récupération disposé dans la partie de base (2) peuvent être observés.

12. Dispositif de broyage des aliments selon l'une des revendications 1 à 11, **caractérisé en ce que** :
a. le dispositif de broyage des aliments est conçu en ce sens qu'il peut être positionné sur un plan de travail, par exemple sur une surface de table de cuisine, pour un processus de broyage des aliments ; et / ou **en ce que**
b. le dispositif de broyage des aliments est conçu en ce sens qu'il peut être positionné de manière sélective dans une orientation de positionnement parmi les plusieurs orientations de positionnement différentes possibles, sur un plan de travail, par exemple sur une surface de table de cuisine, pour un processus de broyage des aliments ; et / ou **en ce que**
c. le dispositif de broyage des aliments est conçu en ce sens qu'il peut être utilisé sur un plan de travail, par exemple sur une surface de table de cuisine, en positionnant le premier outil de broyage dans une première orientation de positionnement pour un processus de broyage des aliments, d'une part, et en positionnant l'autre outil de broyage dans une autre orientation de positionnement, qui est différente de la première orientation de positionnement, pour un processus de broyage des aliments, d'autre part ;
d. une orientation de positionnement parmi les plusieurs orientations de positionnement différentes possibles est associée à chaque outil de broyage et **caractérisé en ce que** le dispositif de broyage des aliments est conçu en ce sens qu'il peut être utilisé sur un plan de travail, par exemple sur une surface de table de cuisine, en positionnant l'un des outils de broyage dans l'orientation de positionnement associée à l'outil de broyage, pour un processus de broyage des aliments.

13. Dispositif de broyage des aliments selon l'une des revendications 1 à 12, **caractérisé en ce que** :
a. le dispositif de broyage des aliments présente des pieds de support destinés au positionnement du dispositif de broyage des aliments dans diverses orientations de positionnement ; et / ou **en ce que**
b. la partie de base (2) présente des pieds de support ; et / ou **en ce que**
c. des pieds de support sont présents, lesquels sont fabriqués en un matériau élastique et / ou en un matériau dotée d'une friction élevée par adhérence, en particulier un matériau en caoutchouc ; et / ou **en ce que**
d. la partie de base (2) présente des pieds de support faisant saillie par rapport aux outils de broyage.

14. Dispositif de broyage des aliments selon la revendication 13, **caractérisé en ce que** :
a. au moins un pied de support est disposé de telle sorte qu'il peut être utilisé pour différentes orientations de positionnement ; et / ou **en ce que**
b. les pieds de support sont disposés au niveau des bords et / ou le long des bords de la partie de base, conçue en particulier en tant que polyèdre ou en tant que parallélépipède ; et / ou **en ce que**
c. les pieds de support sont disposés aux coins de la partie de base, conçue en particulier en tant que polyèdre ou en tant que parallélépipède ; et / ou **en ce que**
d. la partie de base (2) présente des pieds de support qui servent exclusivement au positionnement dans une seule orientation de positionnement parmi les diverses orientations de positionnement possibles ; et / ou **en ce que**
e. la partie de base (2) présente des pieds de support sur au moins l'une de ses surfaces.

15. Dispositif de broyage des aliments selon l'une des revendications 1 à 14, **caractérisé en ce que** :
a. la partie de base (2) est fabriquée en tant que pièce moulée par injection, en particulier en tant que pièce en plastique moulée par injection, ou **caractérisé en ce que** la partie de base (2) présente au moins une partie fabriquée en tant que pièce moulée par injection, en particulier en tant que pièce en plastique moulée par injection, ou **caractérisé en ce que** la partie de base (2) est constituée de plusieurs parties fabriquées, en particulier en tant que pièces moulées par injection, en particulier en tant que pièces en plastique moulées par injection ; et / ou en ce que
b. la partie de base (2) présente le contour d'un parallélépipède en tant que contour extérieur et **caractérisé en ce qu'**une ouverture destinée à l'insertion d'un bac de récupération est présente au niveau d'une surface frontale et **caractérisé en ce que** la pièce de coupe (3) est disposée au niveau de l'une des surfaces latérales qui est voisine de la surface frontale, et **caractérisé en ce qu'**un autre outil de broyage est disposé respectivement au niveau des autres surfaces latérales qui sont voisines de la surface frontale.
